# EUROPEAN PATENT SPECIFICATION

(11) **EP 4 202 694 B1**
(45) Date of publication and mention of the grant of the patent: **04.11.2026**
(21) Application number: 22738993.9
(22) Date of filing: 11.01.2022
(51) Int. Cl.: H04L 9/00, G06F 16/24, G06F 16/22, G06F 16/27, G06F 16/2455, H04L 67/568, G06F 21/64, H04L 9/40

(54) **NODE MEMORY-BASED DATA PROCESSING METHOD AND APPARATUS, DEVICE, AND MEDIUM**
KNOTENSPEICHERBASIERTES DATENVERARBEITUNGSVERFAHREN UND -VORRICHTUNG, VORRICHTUNG UND MEDIUM
PROCÉDÉ ET APPAREIL DE TRAITEMENT DE DONNÉES À BASE DE MÉMOIRE DE NOEUDS, DISPOSITIF ET SUPPORT

(30) Priority: 18.01.2021 CN 202110063372
(43) Date of publication of application: 28.06.2023
(73) Proprietor: Tencent Technology (Shenzhen) Company Limited, Shenzhen, Guangdong 518057 (CN)
(72) Inventor: LI, Maocai, Shenzhen, Guangdong 518057 (CN); WANG, Zongyou, Shenzhen, Guangdong 518057 (CN); LAN, Hu, Shenzhen, Guangdong 518057 (CN); ZHU, Gengliang, Shenzhen, Guangdong 518057 (CN); LIU, Pan, Shenzhen, Guangdong 518057 (CN); ZHOU, Kaiban, Shenzhen, Guangdong 518057 (CN); SHI, Yifang, Shenzhen, Guangdong 518057 (CN); HUANG, Huankun, Shenzhen, Guangdong 518057 (CN); ZHANG, Jinsong, Shenzhen, Guangdong 518057 (CN); KONG, Li, Shenzhen, Guangdong 518057 (CN); LIAO, Zhiyong, Shenzhen, Guangdong 518057 (CN)
(74) Representative: Novagraaf International SA
(86) International application number: PCT/CN2022/071270
(87) International publication number: WO 2022/152114

(56) References cited:
- CN-A- 107 807 951
- CN-A- 110 020 859
- CN-A- 110 175 188
- CN-A- 110 493 148
- CN-A- 110 990 490
- CN-A- 111 045 792
- CN-A- 111 340 470
- CN-A- 111 488 115
- CN-A- 112 380 149
- CN-A- 113 094 396
- US-A1- 2020 143 372

## Description

This application claims priority to Chinese Patent Application No. 202110063372.9, entitled "NODE MEMORY-BASED DATA PROCESSING METHOD AND APPARATUS, DEVICE, AND MEDIUM" and filed with the National Intellectual Property Administration, PRC on January 18, 2021.

### FIELD

The present disclosure relates to the technical field of data processing, and in particular to a data processing technology based on a node memory.

### BACKGROUND

At present, when mining in a blockchain system, due to the delay of a network, multiple miners (such as two miners) may simultaneously calculate hash values that satisfy a condition since a hash value is generated randomly, and it is possible that multiple blocks (such as block 1A and block 1B) are simultaneously mined. In this case, if the two miners keep accounts together, that is, if the two miners write block 1A and block 1B into a blockchain database of the blockchain at the same time, a divergence of the blockchain will be caused.

It can be seen that after data in block 1A and data in block 1B are both written into the blockchain database of the blockchain, if a transaction in a certain block (for example, block 1A) is queried or to be verified, relevant data of the transaction in block 1A needs to be accessed from the blockchain, thereby reducing the data access efficiency.

CN111340470A provides a block chain transaction processing method, a node and a contract container. A cache is arranged in a contract container, the block chain state data is stored in a contract container in a key value pair form, keys and values of the hotspot data are stored into a memory.

### SUMMARY

The invention is defined by the appended claims. The present disclosure provides a data processing method and apparatus based on a node memory, a device and a medium, which can improve the data access efficiency.

One aspect of the present disclosure provides a data processing method based on a node memory, the method is implemented by a blockchain node, and includes:
acquiring a transaction in a first block that is to be written into a blockchain divergence in the node memory, and acquiring a data reading contract associated with the transaction from a chain reading cache in the node memory;
acquiring a write cache mapping table associated with the first block by invoking the data reading contract, and determining, on the basis of a first block cache for the first block that is recorded in the write cache mapping table, target read data for executing the transaction; and
executing the transaction by using the target read data, storing a target execution result corresponding to the transaction as target cache data in the first block cache, and writing the first block into the blockchain divergence.

One aspect of the embodiments of the present disclosure provides a computer device, including: a processor and a memory,
the processor being connected to the memory, the memory being configured to store a computer program, the computer program, when executed by the processor, causing the computer device to perform the method according to the embodiments of the present disclosure.

One aspect of the embodiments of the present disclosure provides a computer-readable storage medium, storing a computer program, the computer program being loaded and executed by a processor to cause a computer device with the processor to perform the method according to the embodiments of the present disclosure.

When a blockchain node (for example, a full node in a blockchain network) in the embodiments of the present disclosure acquires a first block (for example, a packed block to be written into the blockchain divergence), a write cache may be pre-established for the first block, and the write cache established for the first block may be collectively referred to as a first block cache; and a mapping relation between the first block and the first block cache may be added to a write cache mapping table. In this way, when the blockchain node needs to verify a transaction in the first block, the blockchain node can quickly acquire a data reading contract (i.e. a hot-spot contract) associated with the transaction from a chain reading cache in a node memory), and then invoke the data reading contract to acquire the aforementioned write cache mapping table, so as to quickly access the first block cache for the first block in the write cache mapping table. In this case, the blockchain node can quickly acquire target read data for executing the transaction, thereby improving the data access efficiency. The blockchain node may execute the transactions recorded in the first block by using the target read data, so that when the verification of these transactions is successfully completed, transaction execution results of the corresponding transactions may be written into the first block cache for the first block respectively. For example, when the blockchain node traverses and executes these transactions according to a transaction execution order during packing, the blockchain node can quickly read the transactions locally from the first block cache, thereby improving the data access efficiency. In addition, by introducing the write cache mapping table (i.e. a cache management mechanism that supports divergence) in the embodiments of the present disclosure, during a consensus confirmation process for the first block, the transaction execution results of the transactions in the first block that is temporarily not determined to belong to the longest chain are taken as target cache data and are stored to the first block cache. In this way, after completing the consensus confirmation of the first block, the blockchain node allow the first block to be written into a diverged blockchain (which refers to a local blockchain supporting divergence in the node memory here) in the node memory, so that a multi-level cache can be constituted in the node memory through hash values of these stored blocks, which can improve the data reading efficiency.

### BRIEF DESCRIPTION OF THE DRAWINGS

To describe the technical solutions of the present disclosure or the related technology more clearly, the following briefly introduces the accompanying drawings required for describing the embodiments or the related technology. The accompanying drawings in the following description show some embodiments of the present disclosure, and a person skilled in the art may still derive other drawings from these accompanying drawings without creative efforts.
FIG. 1 is a schematic diagram of a network architecture according to an embodiment of the present disclosure.
FIG. 2 is a schematic diagram of a scenario of executing a first block in a node memory and submitting a target block according to an embodiment of the present disclosure.
FIG. 3 is a flowchart of a data processing method based on a node memory according to the present disclosure.
FIG. 4 is a schematic diagram of a scenario of acquiring a first block according to an embodiment of the present disclosure.
FIG. 5 is a schematic diagram of a scenario of establishing a chain reading cache in a node memory according to an embodiment of the present disclosure.
FIG. 6 is a schematic diagram of a scenario of establishing a write cache in a node memory according to an embodiment of the present disclosure.
FIG. 7 is a schematic diagram of a scenario of a blockchain data structure according to an embodiment of the present disclosure.
FIG. 8 is a schematic diagram of a scenario of achieving a multi-level cache on the basis of a block chain structure according to an embodiment of the present disclosure.
FIG. 9 is a schematic diagram of a scenario of invoking a data reading contract to read data according to an embodiment of the present disclosure.
FIG. 10 is a flowchart of a data processing method based on a node memory according to an embodiment of the present disclosure.
FIG. 11 is a schematic diagram of a scenario of submitting a target block according to an embodiment of the present disclosure.
FIG. 12 is a schematic diagram of a scenario of deleting data according to an embodiment of the present disclosure.
FIG. 13 is a schematic structural diagram of a data processing apparatus based on a node memory according to the present disclosure.
FIG. 14 is a schematic structural diagram of a computer device according to an embodiment of the present disclosure.

### DESCRIPTION OF EMBODIMENTS

The technical solutions of the present disclosure are clearly and completely described below with reference to the accompanying drawings of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

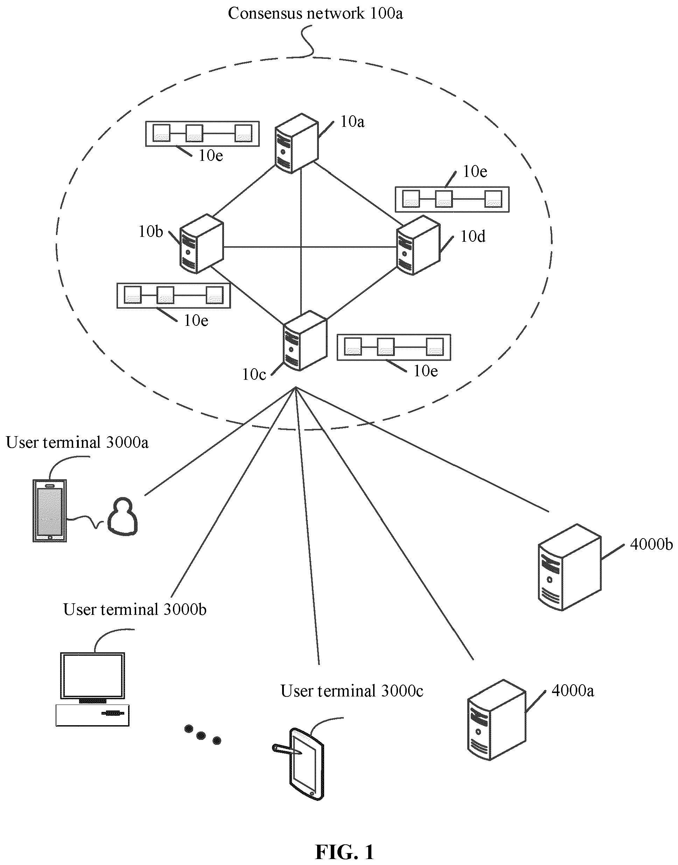

Referring to FIG. 1, FIG. 1 is a schematic diagram of a network architecture according to an embodiment of the present disclosure. The network architecture shown in FIG. 1 may be applied to a blockchain system which may be a distributed system formed by connecting multiple nodes through network communication. The blockchain system may include, but is not limited to, a blockchain system corresponding to a consortium blockchain.

It is to be understood that a blockchain is a new-type application mode of a computer technology such as distributed data storage, peer-to-peer transmission, a consensus mechanism, and an encryption algorithm. It is mainly used for organizing data in a chronological order and encrypting the data into ledgers, so that the data cannot be tampered or forged, but can be verified, stored and updated. The blockchain is essentially a decentralized database. Each node in the database stores an identical blockchain. A blockchain network divides nodes into core nodes and Simplified Payment Verification (SPV) nodes. The core nodes may be responsible for the consensus of the whole blockchain network, that is, the core nodes may be consensus nodes in the blockchain network. A process of writing transaction data into a ledger (for example, a local ledger) in the blockchain network may be as follows. A client sends the transaction data to an SPV node, and then the transaction data is transferred among the SPV nodes in the blockchain network in a relay baton manner, until the consensus node receives the transaction data; the consensus node then packs the transaction data into a block for subsequent consensus with other consensus nodes in the future, so that after the consensus succeeds, the block carrying the transaction data is written into the local ledger (for example, written into a blockchain divergence), and the block carrying the transaction data may be subsequently written into a blockchain database (or may be referred to as a database) corresponding to a target blockchain. The target blockchain here may be understood as the longest chain constructed by these consensus nodes based on the blockchain divergence that supports a divergence characteristic.

It is to be understood that the blockchain system may include a smart contract. The smart contract may be understood as a code that may be understood and executed by each node (including the consensus nodes) of a blockchain, and may execute any logic and obtain a result. A user may invoke the smart contract that has been deployed on the blockchain by initiating a transaction request through the client, and then a data node or SPV node on the blockchain may send the transaction request to the consensus nodes to invoke the smart contract running in the various consensus nodes to execute a transaction requested by the user. It is to be understood that the blockchain may include one or more smart contracts, and these smart contracts may be distinguished by contract invoking addresses, contract identity documents (IDs) or contract names, and the transaction request initiated by the client may also carry a contract invoking address, contract ID or contract name of a smart contract to specify the smart contract that needs to be run. If the smart contract specified by the client is for reading data (that is, a data reading contract), each consensus node may access the local ledger (for example, each node may quickly access a multi-level cache constructed in a node memory through a block chain structure) to read the data; and finally, the various consensus nodes will verify whether respective transaction execution results are consistent (that is, making a consensus); and if the transaction execution results are consistent, the transaction execution results may be stored into write caches of the respective local ledgers, and the transaction execution results of the transaction may be returned to the client.

It is to be understood that the network architecture shown in FIG. 1 may include a core node (i.e. consensus node) cluster, an SPV node cluster and a user terminal cluster. The core node cluster may include multiple core nodes. The multiple core nodes here may include a node 10a, a node 10b, a node 10c, and a node 10d shown in FIG. 1. As shown in FIG. 1, the node 10a, the node 10b, and the node 10d may be connected with the node 10c via a network, so as to form a consensus network 100a shown in FIG. 1. It is to be understood that in the consensus network 100a, the node 10a, the node 10b, and the node 10d may all perform data interaction through the network connection with the node 10c. In addition, the user terminal cluster may include multiple user terminals. The multiple user terminals here may include a user terminal 3000a, a user terminal 3000b, ..., and a user terminal 3000c shown in FIG. 1. As shown in FIG. 1, the user terminal 3000a, the user terminal 3000b, ..., and the user terminal 3000c may be connected with the node 10c via a network, so as to perform data interaction through the network connection with the node 10c. The SPV node cluster may include multiple data nodes. The multiple data nodes here may include a data node 4000a and a data node 4000b shown in FIG. 1. The data node 4000a and the data node 4000b may be used as SPV nodes which are connected with other user terminals via a network, so that other user terminals may perform data interaction with the node 10c through the data node 4000a and the data node 4000b.

In an embodiment of the present disclosure, each core node (for example, the node 10a, the node 10b, the node 10c, and the node 10d) in the consensus network 100a may be collectively referred to as a blockchain node. It is to be understood that these blockchain nodes may all be used for maintaining the same blockchain (for example, a blockchain 10e shown in FIG. 1 may be the target blockchain). A Peer to Peer (P2P) network may be formed between any two blockchain nodes in the consensus network 100a. The P2P network may adopt a P2P protocol. The P2P protocol is an application layer protocol running over a Transmission Control Protocol (TCP). In a distributed system, any device such as a server and a terminal may be added to serve as a blockchain node. Each blockchain node may include a hardware layer, an intermediate layer, an operating system layer and an application layer.

It is to be understood that in an embodiment of the present disclosure, one blockchain node may be bound to any role (for example, any individual user, any enterprise, any institution and other entity objects) accessing the blockchain network, so that the blockchain network composed of these blockchain nodes is referred to as a consortium blockchain network. Therefore, the node 10a, the node 10b, the node 10c, and the node 10d shown in FIG. 1 may have a one-to-one correspondence relationship with corresponding roles (that is, entity objects in corresponding transaction scenarios) that need to be connected to the consortium blockchain network. The transaction scenarios here may include an electronic bill scenario, a social scenario, a credit purchase scenario, a credit scenario, and the like. In this case, a target transaction in the corresponding transaction scenario may include an electronic bill transaction, a social transaction, a credit purchase transaction, a credit transaction and the like, and the specific transactions in the corresponding transaction scenarios will not be listed one by one here.

It is to be understood that since each entity object may correspond to one blockchain node, in an embodiment of the present disclosure, the entity objects being the enterprise users (foregoing enterprises) may be taken as an example. The enterprise users may be associated with the same blockchain node (for example, the node 10c shown in FIG. 1 may perform data interaction with user terminals corresponding to multiple enterprise users). For example, in a blockchain electronic bill system, the electronic bill transaction (such as a registration transaction, an invoicing transaction, and a bill transfer transaction) corresponding to invoicing enterprises may be collectively referred to as one transaction. An invoicing enterprise A may perform data interaction with the node 10c shown in FIG. 1 through the user terminal 3000a shown in FIG. 1 to complete a corresponding transaction; by analogy, an invoicing enterprise B may perform data interaction with the node 10c shown in FIG. 1 through the user terminal 3000b shown in FIG. 1 to complete a corresponding transaction; and an invoicing enterprise C may perform data interaction with the node 10c shown in FIG. 1 through the user terminal 3000c shown in FIG. 1 to complete a corresponding transaction.

It is to be understood that in this embodiment of the present disclosure, the entity objects (for example, the invoicing enterprise A, the invoicing enterprise B, and the invoicing enterprise C) that sends a transaction request for an electronic bill transaction may be collectively referred to as a first user, and the blockchain nodes that receive the transaction request sent by the first user (for example, the invoicing enterprise A, the invoicing enterprise B, and the invoicing enterprise C) may be collectively referred to as the data node; and the blockchain nodes participating in the consensus of the transaction request may also be collectively referred to as the core node.

In the consensus network 100a, since the node 10c may perform data synchronization with other blockchain nodes that are in network connection (also referred to as session connection) with the node 10c, that is, the node 10c may synchronize corresponding transaction data information from other blockchain nodes (for example, synchronize the transaction requests sent by other enterprise users from other blockchain nodes), in this case, the data nodes associated with the enterprise users may be different blockchain nodes. For example, the invoicing enterprise A may also perform data interaction with the node 10c shown in FIG. 1 through the user terminal 3000a shown in FIG. 1; the invoicing enterprise B may also perform data interaction with the node 10b shown in FIG. 1 through the user terminal 3000b shown in FIG. 1; and the invoicing enterprise C may also perform data interaction with the node 10a shown in FIG. 1 through the user terminal 3000c shown in FIG. 1. Since these nodes in the blockchain network maintain the same blockchain, a network load in the blockchain network can be effectively balanced by means of randomly allocating the transaction requests sent by different user terminals to the blockchain nodes associated with the blockchain 10e, so that the processing efficiency for transaction data corresponding to the corresponding transactions can be improved.

For another example, in a credit system, a credit transaction requested by the first user (for example, a user corresponding to the user terminal 3000a) may be understood as another transaction. The first user may perform data interaction with the node 10c shown in FIG. 1 through the user terminal 3000a shown in FIG. 1 to send a transaction request for the corresponding transaction to the node 10c shown in FIG. 1. That is, in the credit system, one blockchain node may be configured for each user accessing the credit system to receive the transaction request sent by the corresponding user. It is to be understood that each user in this embodiment of the present disclosure may also be collectively referred to as an entity object. For example, the entity object requesting the aforementioned credit transaction may be the aforementioned individual user, enterprise user, or the like.

It is to be understood that when the data node receives the transaction request, the data node may forward the transaction request initiated by the first user to the core node, so as to verify the validity of the transaction request initiated by the first user through the core node. In this way, the core node may add the transaction requested by the first user to a transaction pool when the validity verification succeeds, so that the transaction data associated with the transaction may be packed into a block later, and it is convenient to subsequently make a consensus with other consensus nodes. After the consensus succeeds, the block carrying the transaction data of the transaction may be written into the local ledger, so that the block carrying the transaction data may be subsequently written into the blockchain database (or may be referred to as a database).

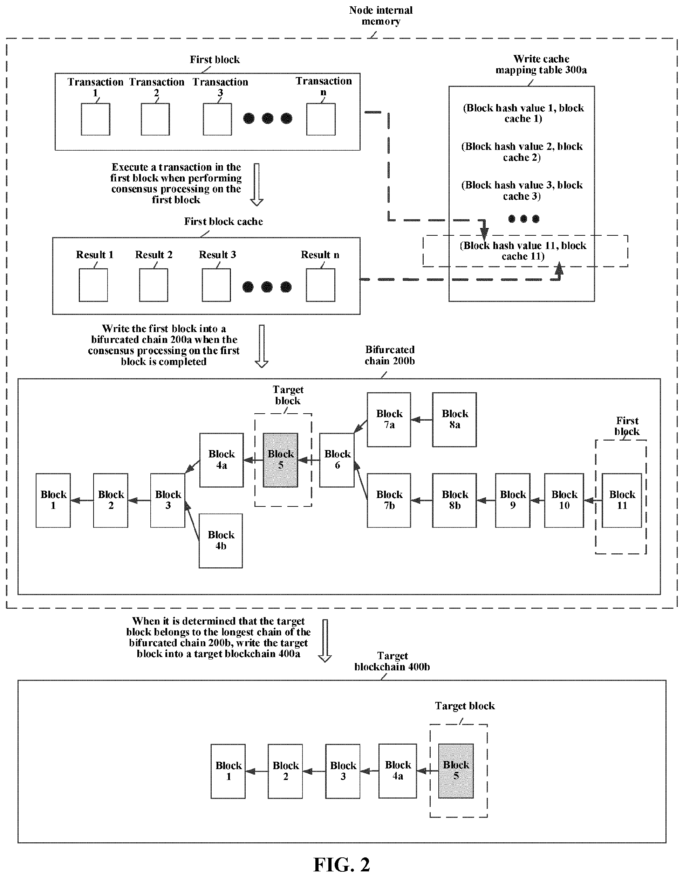

For ease of understanding, referring to FIG. 2, FIG. 2 is a schematic diagram of a scenario of executing a first block in a node memory and submitting a target block according to an embodiment of the present disclosure. The first block shown in FIG. 2 may be a block that is obtained after a certain blockchain node (for example, the node 10c) in the consensus network 100a packs transaction data of multiple transactions in the transaction pool at a current time T1 and is to be written into a blockchain divergence. It is to be understood that in this embodiment of the present disclosure, a chain divergence 200a and a chain divergence 200b may be collectively referred to as the blockchain divergence. The chain divergence 200a may be a blockchain divergence before the first block is written. The chain divergence 200b may be a blockchain divergence after the first block is successfully written. The first block as shown in FIG. 2 may contain multiple transactions. The multiple transactions here may include: a transaction 1, a transaction 2, a transaction 3, ..., and a transaction n shown in FIG. 2.

It is to be understood that in order to avoid waste of storage resources on a chain, in an embodiment of the present disclosure, after the consensus processing is performed on the block generated by packing, the block currently succeeding in consensus are temporarily written into a blockchain divergence (for example, the chain divergence 200a that supports divergence) of the node memory shown in FIG. 2 to obtain the chain divergence 200b shown in FIG. 2. It is to be understood that the chain divergence 200b may be a new blockchain divergence formed after the current block is successfully written into the chain divergence 200a.

As shown in FIG. 2, the blockchain node (for example, the node 10c) may save a transaction execution result of a transaction in the first block to a write cache of the first block after performing the consensus processing on the first block (i.e. execute the transaction in the first block). As shown in FIG. 2, a block hash value of the first block may be a block hash value 11 in a write cache mapping table 300a shown in FIG. 2. In addition, the first block may correspond to a block cache 11 in the write cache mapping table 300a shown in FIG. 2.

For example, when the node 10c packs to obtain the first block to be written into the blockchain divergence, the node 10c may broadcast the first block to other blockchain nodes (for example, the node 10a, the node 10b, and the node 10d shown in FIG. 1) in the consensus network 100a, so that other blockchain nodes (i.e. the node 10a, the node 10b, and the node 10d) in the consensus network 100a may perform consensus processing on the first block needing to be written into the blockchain divergence (for example, the chain divergence 200a that supports divergence) on the basis of a consensus mechanism, that is, other blockchain nodes may acquire a data reading contract associated with each transaction in the first block from a chain reading cache in respective node memories, so that the acquired data reading contract may be invoked to quickly obtain a write cache mapping table associated with the first block. For example, the write cache mapping tables acquired by these blockchain nodes may all be the write cache mapping table 300a shown in FIG. 2.

It is to be understood that when the blockchain node acquires the first block, the blockchain node may establish a corresponding write cache for the first block in the node memory. The write cach established for the first block may be collectively referred to as a first block cache. The first block cache may be the block cache 11 corresponding to the block hash value 11 shown in FIG. 2. The first block cache may be used for storing a transaction execution result (for example, a result 1 shown in FIG. 2) after execution of the transaction 1. Similarly, the first block cache may also be used for storing a transaction execution result (for example, a result 2 shown in FIG. 2) after execution of the transaction 2. By analogy, the first block cache may be used for storing the transaction execution result obtained after each transaction in the first block is executed.

It is to be understood that this embodiment of the present disclosure provides a cache management mechanism that supports chain divergence, so that after the execution of the first block, the first block may be written into the chain divergence 200a that supports divergence to obtain the chain divergence 200b shown in FIG. 2. In this embodiment of the present disclosure, a current latest block (for example, a block 11 with the largest block generation timestamp currently shown in FIG. 2) written into the chain divergence 200b may be collectively referred to as the first block. At the same time, as shown in FIG. 2, the blockchain node may complete selection of the longest chain from blockchains (for example, the chain divergence 200b into which the first block has been successfully written) that support divergence in the node memory in advance on the basis of a longest chain selection policy in the consensus mechanism. In this way, the blockchain node may acquire a target block associated with the first block from the blockchain divergence (for example, the chain divergence 200b in FIG. 2) stored in the node memory, and the target block may be a block 5 shown in FIG. 2. In this way, when the blockchain node determines that the target block belongs to the longest chain of the chain divergence 200b, the target block may be written into a target blockchain 400a in FIG. 2 to obtain a target blockchain 400b containing the target block shown in FIG. 2.

It is to be understood that the write cache mapping table 300a may be used for maintaining a one-to-one correspondence relationship between the block hash value of each block and the block cache (also referred to as the write cache) of each block, and these mapping relationships are all presented in the form of Key Value (KV) pairs. For example, as shown in FIG. 2, the block hash value of each block may be used as a key in the KV pair, and the block cache of the corresponding block may be used as a value in the KV pair. Specifically, for a block 1 in the chain divergence 200b shown in FIG. 2, a mapping relationship between a block hash value of the block 1 and a block cache of the block 1 may be denoted as (block hash value 1, block cache 1); similarly, for a block 2 in the chain divergence 200b shown in FIG. 2, a mapping relationship between a block hash value of the block 2 and a block cache of the block 2 may be denoted as (block hash value 2, block cache 2); similarly, for a block 3 in the chain divergence 200b shown in FIG. 2, a mapping relationship between a block hash value of the block 3 and a block cache of the block 3 may be denoted as (block hash value 3, block cache 3); and by analogy, for the block 11 (i.e. the first block) in the chain divergence 200b shown in FIG. 2, a mapping relationship between a block hash value of the block 11 and a block cache of the block 11 may be denoted as (block hash value 11, block cache 11). The block hash value 11 may be the block hash value of the first block containing n transactions shown in FIG. 2, and the block cache 11 may be the first block cache storing n transaction execution results shown in FIG. 2.

Considering that each block in the chain divergence 200b shown in FIG. 2 stores the block hash value of a previous block, in this embodiment of the present disclosure, the write caches of these blocks may be combined into a logical multi-level cache according to a hash index relationship (for example, a backward hash index relationship) of these blocks in the chain divergence 200b. That is, an upper-level cache of a current block is a write cache of a previous block. For example, in the chain divergence 200b, when a currently executed block is the block 11, an upper-level ache of the block 11 is a write cache of a block 10 in FIG. 2. Similarly, an upper-level cache of the block 10 is a write cache of a block 9 shown in FIG. 2. By analogy, an upper-level cache of the block 2 is a write cache of the block 1 shown in FIG. 2.

This means that in the write cache mapping table 300a corresponding to the chain divergence 200b, a logical query level of the block cache 11 mapped to the block 11 is higher than a logical query level of a block cache 10 mapped to the block 10. Similarly, the logical query level of the block cache 10 mapped to the block 10 is higher than a logical query level of a block cache 9 mapped to the block 9. By analogy, a logical query level of the block cache 2 mapped to the block 2 is higher than a logical query level of the block cache 1 mapped to the block 1.

For ease of understanding, in this embodiment of the present disclosure, using the node 10c in the consensus network 100a as a blockchain node with a cache management function is taken as an example to illustrate a specific process of implementing a data processing method in a node memory of the node 10c. As shown in FIG. 2, the first block may contain multiple transactions, which may be the transaction 1, the transaction 2, the transaction 3, ..., and the transaction n shown in FIG. 2. As shown in FIG. 2, when performing consensus processing on the first block, the node 10c executes the transaction (for example the transaction 1 shown in FIG. 2) in the first block through the acquired data reading contract. It is to be understood that the data reading contract may be a hot-spot contract read by the node 10c from the chain reading cache in the node memory.

It is to be understood that in an embodiment of the present disclosure, a chain reading cache may be pre-established in the node memory, so as to temporarily store some commonly used chain data through the chain reading cache, for example, some frequently invoked transaction contracts, or the same contract invoking account that often initiates a contract invoking request. In the present disclosure, the same contract invoking account that often initiates a contract invoking request within a target duration may be collectively referred to as a hot-spot invocation account.

It is to be understood that there is a certain transaction execution order among the n transactions packed in the block. Therefore, when performing the consensus processing on the first block, the node 10c may traverse and execute these transactions in the first block in the node memory to verify the reliability and authenticity of the transactions. For example, the blockchain node (for example, the node 10c) may temporarily keep the transaction execution result (i.e. the result 1 shown in FIG. 2) of the transaction 1 in the first block in the write cache of the corresponding block, so that the write cache (i.e. the first block cache shown in FIG. 2) of the current block may be adaptively used as a cache with the highest logical query level when it is necessary to execute other transactions (for example, the transaction 2) in the same block. In this way, during the execution of other transactions, the blockchain node (for example, the node 10c) may quickly query target read data required for executing other transactions (for example, the transaction 2) from the write cache of the current block, and then may execute other transactions on the basis of the queried target read data to respectively write the transaction execution results of other transactions into the write cache of the current block for saving. The transaction execution result of the transaction 2 is the result 2 shown in FIG. 2; the transaction execution result of the transaction 3 is a result 3 shown in FIG. 2; ...; and the transaction execution result of the transaction n is a result n shown in FIG. 2.

It can be seen that in this embodiment of the present disclosure, accesses to a blockchain database can be greatly reduced by means of caching these transaction execution results (for example, transaction result data) in the node memory, so that network requests can be reduced. In this way, during execution of a certain block, the reading efficiency for the target read data required by the corresponding transaction can be improved, and the transaction execution efficiency and the block production rate can be improved, so that the throughput of the target blockchain can be further increased. For example, more target blocks belonging to the longest chain can be allowed to be written into the target blockchain.

It is to be understood that when writing a target block into the target blockchain, the blockchain node (for example, the node 10c) may also write data in a target block cache for the target block into a blockchain database corresponding to the target blockchain. The blockchain node (for example, the node 10c) may use the data in the target block cache as target chain data on the target blockchain to write the target chain data into the chain reading cache, so that it is convenient to provide a new block generated by subsequent packing with an access channel for quickly accessing a hot-spot invocation account or a hot-spot contract.

It is to be understood that in an embodiment of the present disclosure, a hash relationship table is also maintained. The hash relationship table records mapping relationships between block heights and block hash values of these blocks in a blockchain (for example, the chain divergence 200b shown in FIG. 2). The block height is the sequential number of a block in a blockchain, and indicates a position of the block in the blockchain. However, multiple blocks may have the same block height, and a blockchain divergence, which is a branch diverged from the target blockchain, is generated when multiple blocks having the same block height are to be added to the target blockchain at the same position on the target blockchain. For example, the chain divergence 200b is diverged from a local chain in the node memory. In this embodiment of the present disclosure, the divergences in the chain divergence 200b may be collectively referred to as branch chains (or standby chains), for example, further including branch chains besides a main chain composed of the block 1, the block 2 and the block 3. The branch chains here may at least include a branch chain 1a and a branch chain 1b. The blocks in the branch chain 1a may contain a block 4a, a block 5, a block 6, a branch chain 2a (a block 7b, a block 8b, a block 9, a block 10, and a block 11), and a branch chain 2b (a block 7a and a block 8a). The blocks in the branch chain 1b may contain a block 4b.

In this embodiment of the present disclosure, a branch chain where a newly added block is located may be collectively referred to as a first branch chain, and other branch chains in the blockchain divergence may be collectively referred to as a second branch chain. For example, the branch chain 1a may be on the first branch chain as shown in FIG. 2, and the branch chain 1b may be on the second branch chain. As shown in FIG. 2, the branch chain 2a in the first branch chain may be a first sub-branch chain (i.e. a new first branch chain), and the branch chain 2b in the first branch chain may be a second sub-branch chain (i.e. a new second branch chain).

The blocks in the first sub-branch chain may contain the block 7b, the block 8b, the block 9, the block 10, and the block 11 shown in FIG. 2. The blocks on the second sub-branch chain may include the block 7a and the block 8a shown in FIG. 2. Therefore, as shown in FIG. 2, if a newly added block (for example, the first block shown in FIG. 2) may cause a certain branch chain (for example, the branch chain 1a) to accumulate more work, this branch chain (for example, the branch chain 1a) will likely serve as a new main chain. In order to avoid the waste of storage resources on the chain, in this embodiment of the present disclosure, the longest chain including the blockchain divergence may be pre-selected locally in the node memory, so that when it is determined that the target block belongs to the longest chain including the blockchain divergence, the data in the target block cache for the target block may be directly written into the blockchain database corresponding to the target blockchain, so that it may be determined that all the data written into the blockchain database belong to the data on the longest chain. In this way, data on other branch chains not belonging to the main chain on the blockchain divergence will not be written into the blockchain database, so that the waste of storage resources on the chain may be effectively avoided.

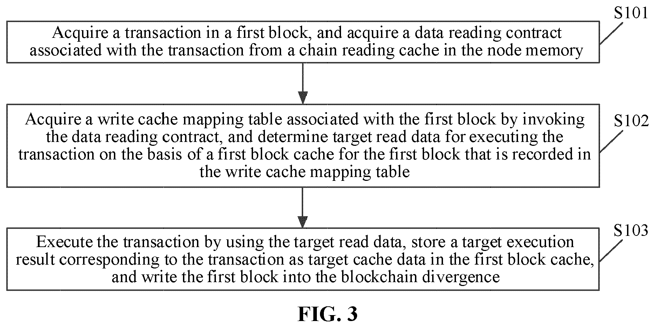

The process of determining, by the blockchain node (for example, the node 10c) on the basis of the data reading contract, the target read data for executing the transaction and acquiring the target block associated with the first block may refer to the following embodiments corresponding to FIG. 3 to FIG. 12.

Referring to FIG. 3, FIG. 3 is a flowchart of a data processing method based on a node memory according to the present disclosure. As shown in FIG. 3, the method may be implemented by the blockchain node in the blockchain network. A data processing apparatus based on a node memory may be run in the blockchain node. The blockchain node may be any node in the consensus network 100a shown in FIG. 1. The method may include the following S101-S104.

S101. Acquire a transaction in a first block, and acquire a data reading contract associated with the transaction from a chain reading cache in the node memory.

The first block is to be written into a blockchain divergence in the node memory. The blockchain divergence here may be a local blockchain that supports divergence. A blockchain node may perform consensus processing on the first block when acquiring the first block containing the transaction, so as to generate a transaction processing instruction for verifying the transaction in the first block; the transaction processing instruction contains a hot-spot reading auxiliary parameter associated with the transaction; and the hot-spot reading auxiliary parameter includes: a contract invoking address for executing a transaction contract of the transaction. The blockchain node may extract the contract invoking address from the transaction processing instruction, and search the chain reading cache in the node memory for a hot-spot contract matched with a contract name mapped to the contract invoking address on the basis of the contract invoking address. The hot-spot contract may be stored in the chain reading cache and may have been accessed for a cumulative number of times greater than an access threshold. The blockchain node may determine the found hot-spot contract matched with the contract name as the data reading contract associated with the transaction.

For ease of understanding, the blockchain node involved in this embodiment of the present disclosure may be the core node in the implementation corresponding to FIG. 1, for example: the node 10c. It is to be understood that in this embodiment of the present disclosure, each node (for example, a node in the consensus network 100a) may be used for receiving data sent from the outside during normal work, may perform block uploading processing on the basis of the received data, and may also send data to the outside. The blockchain nodes here may include: computer devices such as, a mobile phone, a tablet computer, a notebook computer, a palmtop computer, a smart speaker, a mobile Internet device (MID), a point of sale (POS) machine, a wearable device (for example, a smart watch or a smart bracelet), and a server. The server may be an independent physical server, or may be a server cluster including multiple physical servers or a distributed system, or may be a cloud server providing basic cloud computing services, such as a cloud service, a cloud database, cloud computing, a cloud function, cloud storage, a network service, cloud communication, a middleware service, a domain name service, a security service, a CDN, big data, and an artificial intelligence platform.

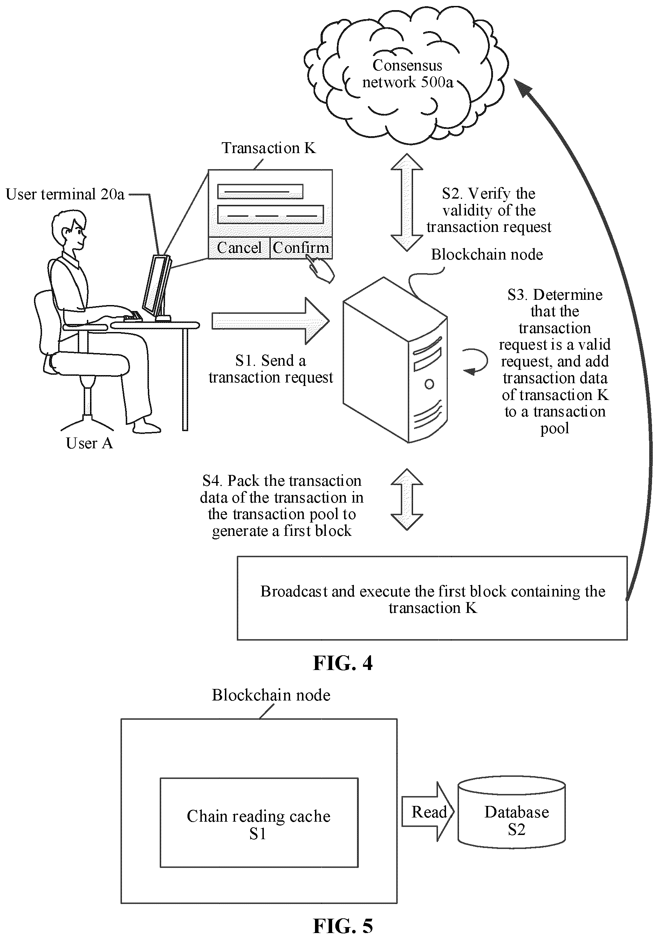

For ease of understanding, referring to FIG. 4, FIG. 4 is a schematic diagram of a scenario of acquiring a first block according to an embodiment of the present disclosure. The blockchain node as shown in FIG. 4 may receive a transaction request sent by a user A through a user terminal 20a shown in FIG. 4. As shown in FIG. 4, when the user A needs to transfer an asset to a user B (for example, the user A needs to transfer a virtual electronic resource to the user B), the user A may execute a triggering operation for a "confirm transaction" control in a transaction detail page of a transaction K shown in FIG. 4, so as to execute S1 shown in FIG. 4, and a transaction request for the transaction K may be sent to the blockchain node shown in FIG. 4. It is to be understood that the virtual electronic resource here may include but not limited to the virtual assets such as an electronic bill, a credit resource, and a game currency. The transaction request may be used for instructing the blockchain node to execute S2 shown in FIG. 4, so as to verify the validity of the transaction request through other blockchain nodes in a consensus network 500a shown in FIG. 4. For example, other blockchain nodes may perform signature verification on signature information of the user A carried in the transaction request, so that when the signature verification succeeds, it is determined that the user A initiating the transaction K has a permission to transfer the asset.

In this way, when it is determined that the transaction request is a valid request, the blockchain node may execute S3 shown in FIG. 4: add transaction data of the transaction K to a transaction pool when it is determined that the transaction request is a valid request. That is, the transaction K requested by the user A to execute (for example, the transaction requested by the user A to transfer the virtual electronic resource to the user B) is used as a target transaction, so that the transaction data (for example, transaction detail data and a transaction execution result of the transaction K) after the execution of the target transaction may be added to the transaction pool; and when the blockchain node is elected to be a committer node subsequently, it may execute S4 shown in FIG. 4: pack the transaction data corresponding to the transaction in the transaction pool to generate the first block to be written into the blockchain divergence. The transaction pool may include n transactions.

It is to be understood that n may be a positive integer, and the n transactions in the first block may include, but is not limited to, the transaction K shown in FIG. 4. As shown in FIG. 4, the blockchain node may also be used for broadcasting the first block containing the transaction K to the consensus network 500a shown in FIG. 4, so that other blockchain nodes (i.e. other core nodes) in the consensus network 500a may perform consensus processing on the first block to verify the validity of the transaction execution result corresponding to the transaction in the first block.

It is to be understood that when acquiring the first block, the blockchain node may pre-establish a corresponding write cache for the first block in the node memory of the blockchain node. It is to be understood that in this embodiment of the present disclosure, the write cache established for the first block may be collectively referred to as a first block cache. In this way, when executing the first block through a consensus layer, the blockchain node shown in FIG. 4 may directly acquire one or more transactions in the first block, and then may generate a transaction processing instruction for verifying these transactions in the first block. The transaction processing instruction may contain a hot-spot reading auxiliary parameter associated with the transaction. The hot-spot reading auxiliary parameter here may include: a contract invoking address for executing a transaction contract of the transaction. In this way, when acquiring the contract invoking address, the blockchain node may acquire the data reading contract associated with the transaction in a chain reading cache in the node memory on the basis of the contract invoking address, and may then continue to execute the following S102.

It is to be understood that the chain reading cache here may be used for temporarily storing some commonly used chain data. It is to be understood that a cache management mechanism involved in this embodiment of the present disclosure may include managing the chain reading cache and managing a write cache. In this embodiment of the present disclosure, the chain reading cache and the write cache may be collectively referred to as a local cache. It is to be understood that by introducing the cache management mechanism in this embodiment of the present disclosure, in the process of executing a certain block (for example, the first block), the data (for example, a transaction execution result of the execution of the transaction in the first block) to be subsequently written into a blockchain database is used as cache data that is temporarily written into the write cache of the currently executed block (i.e. the first block), so that in the subsequent process of executing a new first block, a new multi-level cache may be achieved in the local cache through a hash chain type structure. In addition, in an embodiment of the present disclosure, after the execution of the first block, the data in the write cache of a target block associated with the first block may be used as chain data that may be written into the blockchain database, and obtained latest chain data may be temporarily stored in the chain reading cache, so that the hot-spot data in the chain reading cache may be quickly accessed during the subsequent execution of the new first block.

The management of the chain reading cache may include: adding chain data to the chain reading cache, using the chain data in the chain reading cache, and deleting the chain data from the chain reading cache.

For example, the blockchain node may pre-establish a chain reading cache for a blockchain (for example, the target blockchain) in the node memory. For ease of understanding, referring to FIG. 5, FIG. 5 is a schematic diagram of a scenario of establishing a chain reading cache in a node memory according to an embodiment of the present disclosure. As shown in FIG. 5, the blockchain node may reserve a cache space in the node memory to establish a chain reading cache S1 shown in FIG. 5 in the cache space. It is to be understood that the chain reading cache S1 may be the above-mentioned chain reading cache. It is to be understood that the chain reading cache in the node memory (that is, the chain reading cache S1 shown in FIG. 5) may be used for temporarily storing some chain data that will be frequently accessed or will be accessed again in the near future. The chain data here refers to data historically written into the blockchain database corresponding to the target blockchain. In this way, when a certain transaction in the block is executed, the corresponding hot-spot data (for example, the hot-spot contract that needs to be frequently accessed) may be quickly and directly found in the chain reading cache (i.e. the chain reading cache S1 shown in FIG. 5) of the node memory, without accessing the blockchain database directly through a network (i.e. without accessing a database S2 shown in FIG. 5 directly through a network), that is, without querying related chain data in the blockchain database, so that the data access efficiency can be effectively improved. It is to be understood that the hot-spot contract here may be a transaction contract that has been accessed for a cumulative number of times greater than an access threshold within a unit cumulative cycle of the chain reading cache (i.e. the chain reading cache S1). For example, the transaction contract may be the data reading contract used for reading data from the write cache (or the blockchain database) of the node memory.

On the contrary, it is to be understood that for the chain reading cache (i.e. the chain reading cache S1 shown in FIG. 5) in the node memory, in order to prevent the chain data in the chain reading cache from occupying a large memory space, in an embodiment of the present disclosure, some chain data that is not frequently accessed also needs to be stored in the database S2 shown in FIG. 5 and may be synchronized to the chain reading cache in the node memory. The chain data whose cumulative access frequency is less than or equal to the access threshold is deleted to avoid waste of memory resources of the node memory.

It is to be understood that the write cache may be used for temporarily storing data changed in each transaction (that is, temporarily storing the transaction execution result of each transaction). For example, in the process that the user A transfers the virtual electronic resource (such as the game currency) to the user B, the write cache may be used for temporarily storing an account balance and the like in a user account address of the user A. It is to be understood that the management of the write cache involved here may include: adding a write cache to a write cache mapping table, using the write cache in the write cache mapping table, and deleting data stored in the write cache in the write cache mapping table.

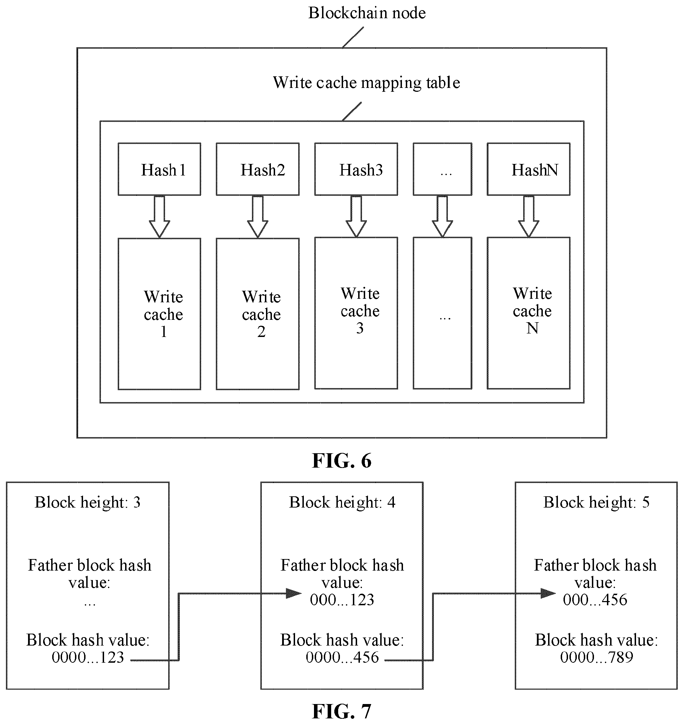

For example, the blockchain node may pre-establish a write cache for each block in the node memory. For ease of understanding, referring to FIG. 6, FIG. 6 is a schematic diagram of a scenario of establishing a write cache in a node memory according to an embodiment of the present disclosure. The blockchain node as shown in FIG. 6 may establish a write cache for each block in the blockchain divergence. For ease of understanding, the write cache mapping table shown in FIG. 6 may be the write cache mapping table 300a in the embodiment corresponding to FIG. 2. This means that in the write cache mapping table shown in FIG. 6, multiple KV pairs may exist. For example, a hash 1 shown in FIG. 6 may be the block hash value 1 shown in FIG. 2, and a write cache 1 may be the block cache 1 shown in FIG. 2. Similarly, a hash 2 shown in FIG. 6 may be the block hash value 2 shown in FIG. 2, and a write cache 2 may be the block cache 2 shown in FIG. 2. By analogy, a hash N shown in FIG. 6 may be the block hash value 11 shown in FIG. 2, and a write cache N may be the block cache 11 shown in FIG. 2. It can be seen that in this embodiment of the present disclosure, the write cache mapping table may be dynamically maintained in the node memory. For example, for a block (that is, the first block) corresponding to the hash N shown in FIG. 6, the transaction execution result of the transaction in the first block may be used as cache data to be written into the write cache N shown in FIG. 6.

S102. Acquire a write cache mapping table associated with the first block by invoking the data reading contract, and determine target read data for executing the transaction on the basis of a first block cache for the first block that is recorded in the write cache mapping table.

It is to be understood that in this embodiment of the present disclosure, a logical query level of each write cache of the node memory is higher than a logical query level of the blockchain database. That is, when invoking the data reading contract, the blockchain node may preferentially traverse these write caches in the node memory according to the logical query levels to query the target read data, so that if the target read data is not found after completing the traverse of these write caches, the blockchain node may further access the blockchain database to query the target read data from the blockchain database.

It is to be understood that for the blocks in the blockchain divergence that supports divergence, the blocks may be connected by a father block hash to form a blockchain data structure of the blockchain divergence. For ease of understanding, referring to FIG. 7, FIG. 7 is a schematic diagram of a scenario of a blockchain data structure according to an embodiment of the present disclosure. The 3 blocks shown in FIG. 7 may be some of the blocks in the blockchain divergence stored in the node memory, and the block data structures of the 3 blocks may include but are not limited to block heights, block hash values (i.e. father block hash values) of previous blocks, block hash values, and the like. It is to be understood that, for a block (for example, the block 3 shown in FIG. 2) with a block height of 3 shown in FIG. 7, the block hash value (i.e. a hash character string 0000...123 shown in FIG. 7) of the block 3 may be used as the father block hash value of a subsequent block. Similarly, for a block (for example, the block 4a shown in FIG. 2) with a block height of 4 shown in FIG. 7, the block hash value (i.e. a hash character string 0000...456 shown in FIG. 7) of the block 4a may also be used as the father block hash value of a subsequent block. By analogy, for a block (for example, the block 5 shown in FIG. 2) with a block height of 5 shown in FIG. 7, the block hash value (i.e. a hash character string 0000...789 shown in FIG. 7) of the block 5 may also be used as the father block hash value of a subsequent block (for example, the block 6 shown in FIG. 2). Based on this, the connection relationship between every block supporting divergence in the node memory will not be listed one by one.

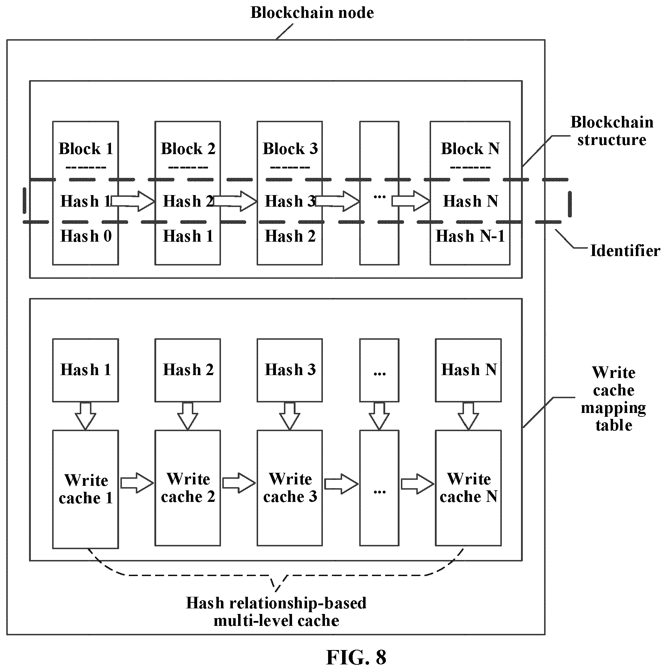

It is to be understood that since the block hash value of one block may be used for uniquely identifying the block, and each block stores the block hash value of the previous block, in this embodiment of the present disclosure, the write cache of the previous block can be quickly found through a block chain structure composed of the hash relationship in the blockchain data structure shown in FIG. 7 and the write cache mapping table shown in FIG. 6. In other words, in this embodiment of the present disclosure, a new multi-level cache may be formed by combining the write caches of the various blocks according to the hash relationships in the block chain structure. For ease of understanding, referring to FIG. 8, FIG. 8 is a schematic diagram of a scenario of achieving a multi-level cache on the basis of a block chain structure according to an embodiment of the present disclosure. The block chain structure shown in FIG. 8 is obtained by combining the blocks in the blockchain divergence in the node memory according to the hash relationships.

The block hash value of a block 1 shown in FIG. 8 may be a hash 1 shown in FIG. 8. The hash 1 may be used as a unique identifier of the block 1. In addition, the block hash value of the previous block of the block 1 may be a hash 0 in the block 1 shown in FIG. 8. Similarly, the block hash value of a block 2 shown in FIG. 8 may be a hash 2 shown in FIG. 8. The hash 2 may be used as a unique identifier of the block 2. In addition, the block 2 stores the block hash value of the previous block (i.e. the block 1 shown in FIG. 8), for example, the hash 1 in the block 2 shown in FIG. 8. Similarly, the block hash value of a block 3 shown in FIG. 8 may be a hash 3 shown in FIG. 8. The hash 3 may be used as a unique identifier of the block 3. In addition, the block 3 stores the block hash value of the previous block (i.e. the block 2 shown in FIG. 8), for example, the hash 2 in the block 3 shown in FIG. 8. By analogy, the block hash value of a block N shown in FIG. 8 may be a hash N shown in FIG. 8. The hash N may be used as a unique identifier of the block N. In addition, the block N stores the block hash value of the previous block (i.e. a block N-1, not shown in FIG. 8), for example, a hash N-1 in the block N shown in FIG. 8.

As shown in FIG. 8, after the blockchain node establishes the write cache for each block in the blockchain divergence, the blockchain node may further combine the write caches of the various blocks into a logical multi-level cache on the basis of the hash relationships (such as hash index relationships) in the block chain structure, so that an upper-level cache of a current block is the write cache of a previous block. For example, if the first block is the block N shown in FIG. 8, the unique identifier (i.e. the hash N in the block N shown in FIG. 8) of the block N may be found in the blockchain nod, so that the write cache (for example, a write cache N in the write cache mapping table shown in FIG. 8) of the block N corresponding to the hash N may be quickly found in the write cache mapping table shown in FIG. 8, and the target read data may be queried in the write cache N. It is to be understood that if the blockchain node finds the target read data in the write cache N (i.e. the first block cache) of the block N, the following S103 may be further executed.

If the target read data is not found in the write cache N (i.e. the first block cache), since the hash N-1 may be used for uniquely identifying the previous block (for example, the block N-1) of the block N, the blockchain node may quickly find the write cache (for example, a write cache N-1, not shown in the figure) of the block N-1 corresponding to the hash N-1 in the write cache mapping table on the basis of the block hash value (for example, the hash N-1 of the block N shown in FIG. 8) of the previous block stored in the block N of the block chain structure, and then may query the target read data in the write cache N-1 (i.e. a second block cache). By analogy, the blockchain node may perform backward traversing through the block chain structure to find the unique identifier of each block in the blockchain divergence, and then may traverse and access the write cache mapped to each block hash value in the write cache mapping table on the basis of the unique identifier of each block. This means that in this embodiment of the present disclosure, the hash relationship-based multi-level cache shown in FIG. 8 may be constructed through the hash relationships of the block chain structures shown in FIG. 8. The logical query level of the write cache (for example, the write cache N shown in FIG. 8) of the block N will be higher than the logical query level of the write cache (for example, the write cache N-1) of the block N-1. By analogy, the logical query level of the write cache (for example, a write cache 3 shown in FIG. 8) of the block 3 shown in FIG. 8 will be higher than the logical query level of the write cache (for example, a write cache 2 shown in FIG. 8) of the block 2. Similarly, the logical query level of the write cache (for example, the write cache 2 shown in FIG. 8) of the block 2 shown in FIG. 8 will be higher than the logical query level of the write cache (for example, a write cache 1 shown in FIG. 8) of the block 1.

It is to be understood that one block may be composed of multiple transactions, and each transaction may contain transaction contracts that need to be invoked. These transaction contracts may contain a method for changing user account data, a method for reading user account data, and the like. One method may correspond to one contract function. For ease of understanding, in this embodiment of the present disclosure, the following is taken as an example: the transaction in the block includes a target transaction for transferring a virtual electronic resource, which is initiated by a first user (for example, Xiaohong) to a second user (for example, Xiaoming), so as to illustrate a specific process of querying the target read data (for example, the user account data in the user account address) of the target transaction in the node memory. In this case, the contract function in the data reading contract associated with the target transaction and acquired in S101 may be used for executing the aforementioned method for reading the user account data.

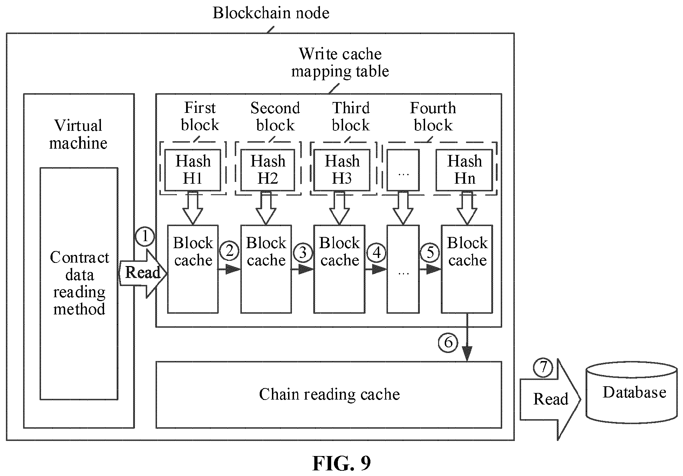

Referring to FIG. 9, FIG. 9 is a schematic diagram of a scenario of invoking a data reading contract to read data according to an embodiment of the present disclosure. In this embodiment of the present disclosure, blocks to which the currently executed target transaction belongs may be collectively referred to as a first block. A block hash value of the first block may be a hash H1 shown in FIG. 9. In this embodiment of the present disclosure, the block hash value of the first block is collectively referred to as a first block hash value. As shown in FIG. 9, when the blockchain node runs the data reading contract on a virtual machine shown in FIG. 9, a KV pair (for example, a KV pair 1) associated with the hash H1 (i.e. the first block hash value) may be pre-acquired from a write cache mapping table shown in FIG. 9 according to the multi-level cache maintained in FIG. 8, so that a block cache (i.e. the first block cache) mapped to the hash H1 (i.e. the first block hash value) may be quickly positioned according to the KV pair 1, and a historical execution result of a historical transaction that is historically written into the first block cache may be acquired in the first block cache. It is to be understood that a transaction execution order of the historical transaction positioned in the first block is earlier than a transaction execution order of the target transaction. For example, if the first user (for example, Xiaohong) has ever transferred an asset to the second user (for example, Xiaoming) (that is, transferred a virtual electronic resource), historical asset transferring records initiated by the first user to the second user by invoking a transaction contract may be collectively referred to as historical transactions. The contract function in the data reading contract may include a first execution function and a second execution function. The first execution function here may be used for reading first asset data in a user account address of the first user. The second execution function here may be used for reading a user account address of the second user, and the second execution function here may also be used for reading second asset data in the user account address of the second user. The function performed by the second execution function will not be limited.

The blockchain node may search the historical execution result of the first block cache for the user account address of the first user (for example, Xiaohong) according to the first execution function in the data reading contract, and search the historical execution result of the first block cache for the user account address of the second user according to the second execution function in the data reading contract. If the blockchain node finds the user account address of the first user in the first block cache, the blockchain node may read the first asset data of the first user (for example, Xiaohong) from the user account address of the first user, such as a remaining asset balance after Xiaohong finished executing the previous transaction (for example, the foregoing historical transaction) (latest changed user account data of the user may be read).

It is to be understood that in order to verify the validity of the target transaction in the first block (that is, the asset transferring transaction initiated by the first user to the second user by invoking the transaction contract), in this embodiment of the present disclosure, step ① in FIG. 9 also needs to be executed according to the second execution function in the data reading contract, that is, the user account address of the second user may be searched in the historical execution result of the first block cache; and if the user account address of the second user is found in the first block cache, the read first asset data and the user account address of the second user may be determined to be asset read data of the target transaction, so that the target read data for executing the transaction may be determined on the basis of the asset read data.

As shown in FIG. 9, if the user account address of the first user is not found in the block cache (i.e. the first block cache) mapped to the hash H1 shown in FIG. 9, the blockchain node may also execute step ② in FIG. 9, that is, the blockchain node may determine a block header of the first block in the blockchain divergence on the basis of the first block hash value (i.e. the hash H1 shown in FIG. 9) mapped to the first block cache, and then determine a father block hash value of the first block to be a second block hash value (for example, a hash H2 shown in FIG. 9) of a second block in the block header of the first block. The blockchain node may further acquire a KV pair (for example, a KV pair 2) associated with the hash H2 (i.e. the second block hash value) in the write cache mapping relationship table shown in FIG. 9, and then may quickly position the block cache mapped to the hash H2 (i.e. the second block hash value) according to the KV pair 2. Based on this, in this embodiment of the present disclosure, the write cache mapped to the second block hash value may be used as a second block cache, so as to query the user account address of the first user in the second block cache. It is to be understood that if the user account address of the first user is found in the second block cache, the blockchain node may read the first asset data of the first user from the user account address of the first user. It is to be understood that the logical query level of the second cache block mapped to the hash H2 shown in FIG. 9 is lower than the logical query level of the first cache block mapped to the hash H1 shown in FIG. 9.

It is to be understood that if the blockchain divergence cached in the node memory of the blockchain node is a local blockchain that supports divergence, the local blockchain may be the chain divergence 200a in the embodiment corresponding to FIG. 2. In this case, the first block may be the block 11 in the embodiment corresponding to FIG. 2. In this embodiment of the present disclosure, a branch chain to be written into the first block on the blockchain divergence may be collectively referred to as a first branch chain (or may be referred to as a first standby chain), and other branch chains besides the first branch chain on the blockchain divergence may be collectively referred to as a second branch chain (or may be referred to as a second standby chain). Therefore, as shown in FIG. 9, the first branch chain may contain multiple blocks shown in FIG. 9 (for example, the first block, the second block, a third block, and a fourth block). It is to be understood that in this embodiment of the present disclosure, the previous block of the second block may be referred to as the third block (i.e. the block corresponding to a hash H3 shown in FIG. 9), and a block, whose block generation timestamp is earlier than the block generation timestamp of the third block, on the first branch chain is collectively referred to as the fourth block. The write cache mapping table shown in FIG. 9 may contain a third block hash value of the third block and a fourth block hash value of the fourth block. It is to be understood that according to the above definition of the multi-level cache, the logical query level of a third block cache mapped to the third block hash value will be lower than the logical query level of the second block cache, and the logical query level of a fourth block cache mapped to the fourth block hash value will be lower than the logical query level of the third block cache.

As shown in FIG. 9, if the blockchain node does not find the user account address of the first user in the second block cache, the blockchain node may traverse and execute step ③, step ④ and step ⑤ in FIG. 9, so as to query the user account address of the first user in a traversing manner in block caches of other blocks on the first branch chain. It is to be understood that if the blockchain node neither finds the user account address of the first user in the second block cache, nor finds the user account address of the first user in both the block cache (for example, the third block cache may be the block cache mapped to the hash H3 shown in FIG. 9) of the third block shown in FIG. 9 and the block cache (for example, the fourth block cache may include but is not limited to the block cache mapped to a hash Hn shown in FIG. 9) of the fourth block shown in FIG. 9, the blockchain node may execute step ⑦ in FIG. 9, so as to query the user account address of the first user in a blockchain database corresponding to the target blockchain. If the user account address of the first user is found in the blockchain database, the first asset data of the first user may be read from the user account address of the first user.

It is to be understood that since one block is composed of multiple transactions, when the blockchain node performs consensus processing on the first block, the blockchain node may perform transaction verification on each transaction in the first block, so that when the blockchain nodes (or the consensus nodes) in the consensus network make a transaction consensus, the validity of a currently executed transaction (for example, the target transaction) may be admitted. Therefore, when these transactions in the first block all frequently invoke the same transaction contract to initiate the asset transferring transaction, the frequently invoked transaction contract may be used as a hot-spot contract to be stored to a chain reading cache shown in FIG. 9. Based on this, in the embodiments of the present disclosure, contract invoking requests for asset transferring initiated frequently by a certain contract invoking account (for example, the contact invoking account corresponding to Xiaohong) may also be cumulated during the execution of the transactions of these blocks, so that the contract invoking account with a cumulative invoking frequency greater than an invoking threshold may be used as a hot-spot invoking account to store in the chain reading cache; therefore, before step ⑦ in FIG. 9 is executed, step ⑥ in FIG. 9 may be executed first subsequently in the node memory such that the blockchain node may query the user account address of the first user in the chain reading cache in the node memory. In this way, accesses to the database shown in FIG. 9 may be greatly reduced. It is to be understood that the database here may be the blockchain database corresponding to the target blockchain. It can be seen that in this embodiment of the present disclosure, the hot-spot data in the chain reading cache during the execution of the transaction may be dynamically updated.

S103. Execute the transaction by using the target read data, store a target execution result corresponding to the transaction as target cache data in the first block cache, and write the first block into the blockchain divergence.

It is to be understood that after the blockchain node completes the execution of S103, the blockchain node may further execute the current transaction (for example, the target transaction) according to the acquired target read data, and the transaction execution result of the currently executed transaction may be collectively referred to as a target execution result. It is to be understood that in this embodiment of the present disclosure, the target execution result (for example, an asset balance after an asset transferring party initiates the target transaction and an asset transferring record of the first user composed of transaction detail data in a transaction detail page) may be further taken as target cache data, so that the target cache data may be stored to the block cache (i.e. the first block cache) of the first block. Therefore, after the execution of all the transactions in the first block is completed, the first block is written into the blockchain divergence.

Since a traditional blockchain system will indiscriminately write the data in each block with a branch into the blockchain database, the blockchain jointly maintained by these miner nodes has blocks requiring version rollback. For example, if the block requiring version rollback is a block 1B, the data in the block 1B will be invalid data, which means that the existing accounting method will inevitably cause waste of a storage space on the chain.

To this end, in an embodiment of the present disclosure, a target block associated with the first block may also be acquired. When it is determined in the node memory that the target block belongs to the longest chain including the blockchain divergence, the data in the target block cache for the target block is written into the blockchain database corresponding to the target blockchain.

Under normal circumstances, the blockchain node may acquire a longest chain selection policy associated with the first block, and then may screen a block that satisfies the longest chain selection policy in the blockchain divergence on the basis of a block height of the first block, and take the block that satisfies the longest chain selection policy as the target block associated with the first block. The target block is a block stored in the node memory and historically written into the blockchain divergence. For example, the block generation timestamp of the target block may be earlier than the block generation timestamp of the first block. When it is determined in the node memory that the target block belongs to the longest chain including the blockchain divergence, the blockchain node may formally write the target block into the target blockchain, and may formally write the data in the target block cache for the target block into the blockchain database corresponding to the target blockchain, thus avoiding the waste of the storage resources on the chain.

It can be seen that in this embodiment of the present disclosure, the blockchain node may also acquire the target block (i.e. the block with the block generation timestamp earlier than that of the first block) associated with the first block in the blockchain divergence according to the longest chain selection policy, so that it can be pre-determined in the node memory whether the target block belongs to the longest chain including the blockchain divergence. It is to be understood that if the blockchain node determines that the target block belongs to the longest chain including the blockchain divergence, the blockchain node may write the data in the write cache (i.e. the target block cache) corresponding to the target block into the blockchain database corresponding to the target blockchain, thereby ensuring that all the data written into the blockchain database belongs to the data on the longest chain, and ensuring the correctness of the data entered in the blockchain database to avoid the waste of storage resources on the chain as much as possible.

It is to be understood that in this embodiment of the present disclosure, by introducing the cache management mechanism, the block (i.e. the first block) executed by the blockchain node through a consensus layer is different from the target block screened according to the longest chain selection policy and written into the target blockchain. For example, the first block here may be the block 11 temporarily stored on the bifurcated chain 200b in the embodiment corresponding to FIG. 2. In addition, the target block here may be the block 5 that has been successfully written into the target blockchain 400b in the embodiment corresponding to FIG. 2.

The longest chain selection policy here includes a first selection policy and a second selection policy. The first selection policy means that the blockchain node may compare the number of blocks on each branch chain of the blockchain divergence, and then may take the branch chain with the largest number of blocks as a main chain. For example, the blockchain node may take a branch chain to which the first block is newly added as the first branch chain in the blockchain divergence, and then may count the number of the first blocks among the blocks on the first branch chain and take the counted number of the blocks on other branch chains (i.e. the second blockchain divergence) in the blockchain divergence as the number of second blocks, so that the branch chain with the largest number of blocks may be taken as the main chain (i.e. the longest chain) in the node memory according to the number of first blocks corresponding to the first branch chain and the number of second blocks corresponding to the second branch chain. In this way, when acquiring the target block associated with the first block (for example, the target block may be a block having a block distance away from the block (for example, the block 11) with the largest block generation timestamp on the longest chain achieving a preset distance threshold, for example, the preset distance threshold being 6 blocks is taken as an example, and the target block may be the block 5 in the embodiment corresponding to FIG. 2), the blockchain node may further determine whether the target block is on the currently determined main chain; and if the target block is on the determined main chain, the blockchain node may allow the target block temporarily stored in the node memory to be written into the target blockchain, so that it can ensure that the blockchain database corresponding to the target blockchain may be used for storing the data in the target block cache for the target block that is currently written into the target blockchain. It is to be understood that in this case, the data in the target block cache is the chain data on the target blockchain.

The second selection policy means that the block chain node may compare the block height of the block with the largest block generation timestamp on each branch chain of the blockchain divergence, and then may take the branch chain with the largest block height as a main chain. For example, when there is a block divergence phenomenon on the blockchain divergence of the node memory, the blockchain node may also determine the block (for example, the block 11 shown in FIG. 2) with the largest block generation timestamp in the first branch chain according to the second selection policy, and may determine the block height of the block (for example, the block 4b shown in FIG. 2) with the largest block generation timestamp in the second branch chain. Based on this, the first branch chain may be taken as an initial main chain. Similarly, the first branch chain has a first sub-branch chain and a second sub-branch chain, so that the blockchain node may also compare the block height of the block (for example, the block 11 shown in FIG. 2) with the largest block generation timestamp in the first branch chain with the block height of the block (for example, the block 8a shown in FIG. 2) with the largest block generation timestamp in the second branch chain, and then a hash chain composed of the blocks on the initial main chain and the blocks on the first sub-branch chain may be collectively referred to as the main chain (i.e. the longest chain); and a block with the block height satisfying a height threshold (for example, 6) relative to the first block is found on the longest chain as the target block to determine whether the target block is on the longest chain.

By means of introducing the write cache mapping table (i.e. a cache management mechanism that supports divergence) in this embodiment of the present disclosure, in a consensus confirmation process for the first block, the transaction execution results of the transactions in the first block that are temporarily not determined to belong to the longest chain are taken as target cache data to be temporarily stored to the first block cache. In this way, after completing the consensus confirmation of the first block, the blockchain node allow the first block to be written into a blockchain divergence (which refers to a local blockchain that supports the divergence in the node memory here) in the node memory, so that a branch-new multi-level cache can be constituted in the node memory through hash values of these stored blocks, which can improve the data reading efficiency in the write caches of these blocks. In addition, the blockchain node may also acquire the target block (i.e. the block with the block generation timestamp earlier than that of the first block) associated with the first block in the blockchain divergence according to the longest chain selection policy, so that it can be pre-determined in the node memory whether the target block belongs to the longest chain including the blockchain divergence. It is to be understood that if the blockchain node determines that the target block belongs to the longest chain including the blockchain divergence, the blockchain node may access the data in the write cache (i.e. the target block cache) corresponding to the target block into the blockchain database corresponding to the target blockchain, thereby ensuring that all the data written into the blockchain database belongs to the data on the longest chain, and ensuring the correctness of the data entered in the blockchain database to avoid the waste of storage resources on the chain as much as possible.

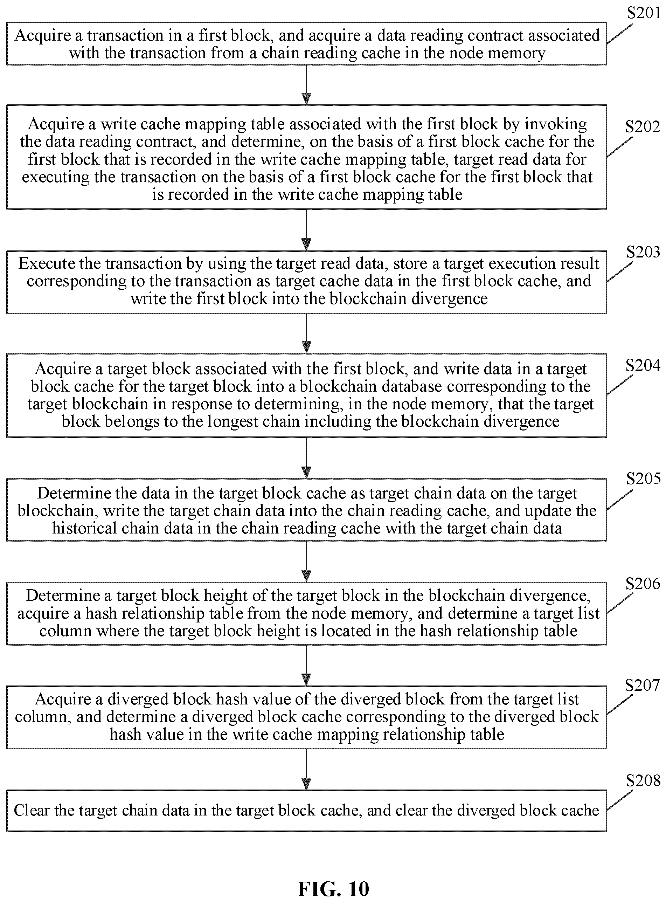

Referring to FIG. 10, FIG. 10 is a schematic flowchart of a data processing method based on a node memory according to an embodiment of the present disclosure. As shown in FIG. 10, the method may be implemented by a blockchain node. The blockchain node may be any blockchain node (for example, the node 10c) in the consensus network 100a shown in FIG. 1. The method includes the following steps S201 to S208:

S201. Acquire a transaction in a first block, and acquire a data reading contract associated with the transaction from a chain reading cache in the node memory.

The first block is in the node memory and is to be written into a blockchain divergence.

S202. Acquire a write cache mapping table associated with the first block by invoking the data reading contract, and determine, on the basis of a first block cache for the first block that is recorded in the write cache mapping table, target read data for executing the transaction on the basis of a first block cache for the first block that is recorded in the write cache mapping table.

S203. Execute the transaction by using the target read data, store a target execution result corresponding to the transaction as target cache data in the first block cache, and write the first block into the blockchain divergence.

S204. Acquire a target block associated with the first block, and write data in a target block cache for the target block into a blockchain database corresponding to the target blockchain in response to determining, in the node memory, that the target block belongs to the longest chain including the blockchain divergence.

A block generation timestamp of the target block is earlier than a block generation timestamp of the first block. The blockchain node may acquire a longest chain selection policy associated with the first block, screen a block that satisfies the longest chain selection policy in the blockchain divergence on the basis of a block height of the first block, and take the block that satisfies the longest chain selection policy as the target block associated with the first block, the target block being a block cached in the node memory and historically written into the blockchain divergence. The blockchain node may write the target block into the target blockchain in response to determining, in the node memory, that the target block belongs to the longest chain including the blockchain divergence, and write data in the target block cache for the target block into the blockchain database corresponding to the target blockchain.

The chain reading cache may include: the hot-spot data and historical chain data. The historical chain data here may include data that is successfully written into a historical block cache for the target blockchain at a historical time instant. The historical block cache is a write cache of a historical block in the blockchain divergence, and a block generation timestamp of the historical block is earlier than a block generation timestamp of the target block. Therefore, after the blockchain node finishes executing S204, S205 may also be executed.

S205. Determine the data in the target block cache as target chain data on the target blockchain, write the target chain data into the chain reading cache, and update the historical chain data in the chain reading cache with the target chain data.

For example, the blockchain node may take the data in the target block cache as the target chain data on the target blockchain, and then may write the target chain data into the chain reading cache at a current time T2 (T2 is after T1). It is to be understood that the chain reading cache contains data (i.e. the historical chain data) written into other block caches (i.e. historical block caches) of the chain reading cache at the historical time instant (i.e. a time before T1). Therefore, when the target chain data is written into the chain reading cache, the historical chain data may be dynamically updated in the chain reading cache (that is, the target chain data may be used as new historical chain data), so that a quick historical chain data access may be provided for a recently generated new first block in the chain reading cache when the new first block is subsequently generated by packing. For another example, the chain reading cache may also be used for storing hot-spot data such as transaction contracts that are frequently invoked (i.e. the hot-pot contracts) and hot-spot invoking accounts that often invoke and initiate a contract invoking request in a process that the blockchain node executes these transactions of a certain block.

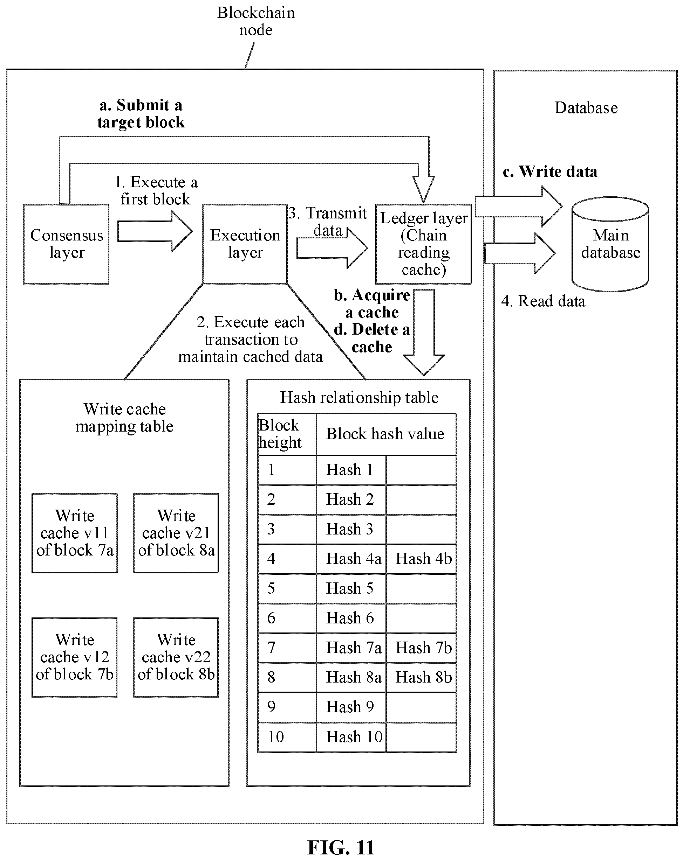

For ease of understanding, referring to FIG. 11, FIG. 11 is a schematic diagram of a scenario of submitting a target block according to an embodiment of the present disclosure. As shown in FIG. 11, when performing step 1 through a consensus layer shown in FIG. 11, the blockchain node may perform consensus processing on a currently packed block (i.e. the first block, which may be the block shown in FIG. 11), and then may perform transaction verification on a transaction (transaction for short) in the first block. In this case, when performing step 2 through an execution layer shown in FIG. 11, the blockchain node executes each transaction in the first block, and then may write a respective transaction execution result into the first block cache when the transaction verification succeeds, so as to maintain cached data in a first block cache in the node memory. It is to be understood that after completing the transaction consensus processing on the transaction in the first block, the blockchain node may complete the consensus processing on the first block, and then may write the first block into a blockchain divergence (i.e. a bifurcated chain that locally supports divergences) of the node memory, so as to obtain the bifurcated chain 200a shown in FIG. 2.

It is to be understood that in the process of executing the transaction of the first block, the blockchain node may execute step 3 shown in FIG. 11, that is, the blockchain node may acquire a hot-spot reading auxiliary parameter associated with the transaction, and may send a transaction processing instruction containing the hot-spot reading auxiliary parameter to a ledger layer shown in FIG. 11, so as to acquire a transaction contract used for executing the transaction from the chain reading cache of the ledger layer on the basis of a contract invoking address in the hot-spot reading auxiliary parameter; and the transaction contract acquired in the chain reading cache may be collectively referred to as the data reading contract. As shown in FIG. 11, if the blockchain node does not acquire the data reading contract associated with the transaction in the chain reading cache, the blockchain node may execute step 4 shown in FIG. 11, and then may acquire the data reading contract associated with the transaction in a database (for example, a main database corresponding to the target blockchain shown in FIG. 11) associated with the blockchain node, so that target read data used for verifying the transaction may be read through the acquired data reading contract, and the transaction may be executed by using the target read data; and a transaction execution result of the transaction may be written into a first block cache corresponding to the first block to dynamically maintain the cached data in the first block cache in a write cache mapping table shown in FIG. 11.

It is to be understood that since a block may contain a large amount of transactions, the execution of these transactions may be in accordance with a transaction execution order. Therefore, in the process of executing these transactions in the first block, the blockchain node may also cumulate transaction contracts frequently invoked in the process of executing these transactions or contract invoking accounts that frequently initiate contract invocation, and then may take the frequently invoked transaction contracts and the contract invoking accounts as hot-spot data, so as to dynamically update the hot-spot data in the chain reading cache in the ledger layer shown in FIG. 11.

It is to be understood that when the consensus layer shown in FIG. 11 writes the first block (for example, a block with a block height of 10 shown in FIG. 11) into the blockchain divergence to obtain the bifurcated chain 200a, the consensus layer in the blockchain node may also select a block that has been historically executed and satisfies the longest chain selection policy on the bifurcated chain 200a on the basis of the longest chain selection policy to be used as the target block associated with the first block, and then may execute step a shown in FIG. 11. When the target block is submitted to the target blockchain, step c shown in FIG. 11 may be further executed, that is, the data in the target block cache corresponding to the target block is written into the main database shown in FIG. 11.

In addition, it is to be understood that the blockchain node may also write the data in the target block cache for the target block into the ledger layer shown in FIG. 11, so as to facilitate the dynamic updating of the historical chain data in the chain reading cache.

It can be seen that in this embodiment of the present disclosure, a cache management mechanism that supports divergence may be provided, so that when the execution of the currently packed block (i.e. the first block) is completed, selection of the longest chain including the blockchain divergence that supports divergence is completed in the node memory, thus determining a block (i.e. the target block) that may be currently submitted to the target blockchain. Then, the blockchain node may take the data in the target block cache for the currently submitted target block as the target chain data and write it into the chain reading cache shown in FIG. 11, and may also perform step b shown in FIG. 11. That is, the target block cache for the target block may be acquire, and step d shown in FIG. 11 may be further executed, so that the data in the target block cache for the target block may be deleted in the node memory.

It is to be understood that as shown in FIG. 11, the blockchain node may maintain a hash relationship table in the node memory, and a block height of the currently submitted target block may be determined through the hash relationship table, so that all blocks (i.e. all bifurcated blocks) with the same block height as that of the target block may be found in the hash relationship table. In other words, it is to be understood that if the blockchain divergence includes a diverged block with the same block height as the target block, the blockchain node may further execute the following S206.

S206: Determine a target block height of the target block in the blockchain divergence, acquire a hash relationship table from the node memory, and determine a target list column where the target block height is located in the hash relationship table.

S207. Acquire a diverged block hash value of the diverged block from the target list column, and determine a diverged block cache corresponding to the diverged block hash value in the write cache mapping relationship table.

S208. Clear the target chain data in the target block cache, and clear the diverged block cache.

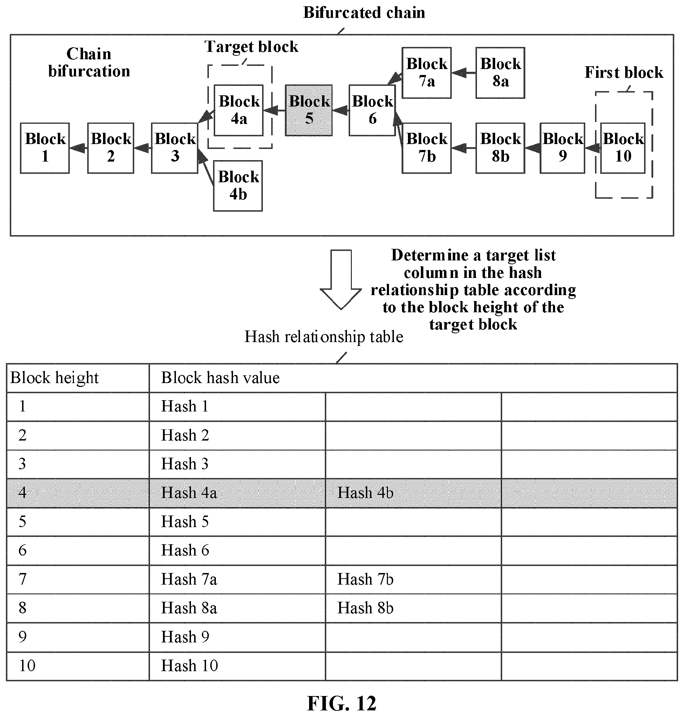

For ease of understanding, referring to FIG. 12, FIG. 12 is a schematic diagram of a scenario of deleting data according to an embodiment of the present disclosure. As shown in FIG. 12, considering that a blockchain divergence (a bifurcated chain shown in FIG. 12) in the node memory may have the characteristics of block divergence, the blockchain node may maintain a hash mapping table (i.e. a hash relationship table shown in FIG. 12) when the bifurcated chain of the node memory supports the divergence characteristics. For example, the hash mapping table shown in FIG. 12 is composed of all blocks in the bifurcated chain according to block heights and block hash values. In the hash mapping table, the number of blocks with the same block heights may be one or multiple. For example, in the bifurcated chain shown in FIG. 12, the blockchain node may acquire a target block associated with a first block (for example, a block with a block height difference of 6 with the first block shown in FIG. 12 may be selected as the target block on the basis of the longest chain selection policy), and then may write data in a target block cache for the target block (for example, the block 4a shown in FIG. 12) into a blockchain database corresponding to a target blockchain when determining that the block 4a (i.e. the target block) shown in FIG. 12 belongs to the longest chain of the blockchain divergence. The blockchain database may be the main database shown in FIG. 11.

In addition, in an embodiment of the present disclosure, after the data in the target block cache is written into the blockchain database corresponding to the target blockchain, in order to improve the data reading efficiency, the data in the target block cache may further be used as target chain data to be written into a chain reading cache. In this way, the target read data may be quickly found directly in the node memory without querying the blockchain database through a network.

Finally, since the carrier capacity of the node memory is limited, in an embodiment of the present disclosure, the target chain data in the target block cache may be deleted in the node memory. Specifically, the blockchain node may determine a block position of the currently submitted target block in the bifurcated chain shown in FIG. 12, that is, the block position of the target block may be a target block height of the target block. For example, the target block height of the block 4a (i.e. the target block) shown in FIG. 12 may be "4" in the hash relationship table shown in FIG. 12, so that a list column where the target block height is "4" in the hash relationship table may be taken as the target list column. As shown in FIG. 12, the blockchain node may determine a block hash value associated with the target block height in the target list column. For example, the block hash value with the target block height of "4" may include a block hash value of the block 4a (for example, a hash 4a) and a block hash value of the block 4b ( for example, a hash 4b) in FIG. 12. It is to be understood that the block 4a here is the diverged block that exists on the blockchain divergence (i.e. the bifurcated chain shown in FIG. 12) and has the same block height as that of the target block. Therefore, since the data in the diverged block will not be recorded in the blockchain database, in order to avoid waste of memory resources in the node memory, the blockchain node may also acquire a diverged block hash value (i.e. the hash 4b shown in FIG. 12) of the diverged block in the target list column. In this way, the blockchain node may quickly determine a diverged block cache corresponding to the diverged block hash value in the write cache mapping relationship table. Therefore, when the blockchain node needs to delete the write cache corresponding to the block hash value in the target list column from the write cache mapping table, the blockchain node may clear the data in the diverged block cache (i.e. the write cache corresponding to the block 4b) while clearing the target block cache (the write cache corresponding to the block 4a), so that the effective utilization rate of the node memory can be improved.

It is to be understood that in this embodiment of the present disclosure, when it is determined in the node memory that the first block belongs to the longest chain on the blockchain divergence, the blockchain node may also write the target cache data in the first block cache into the blockchain database corresponding to the target blockchain.

For example, if the number of transactions in the first node is greater than one, for example, if any two adjacent transactions in the first node may include a first transaction and a second transaction, the target cache data may include first cache data corresponding to the first transaction and second cache data corresponding to the second transaction. The second transaction may be previous to the first transaction. For example, the first transaction here may be the target transaction, and the second transaction here may be the historical transaction. In this case, the blockchain node may write the second cache data in the first block cache into the blockchain database while writing the first cache data in the first block cache into the blockchain database corresponding to the target blockchain.

In other words, in this embodiment of the present disclosure, the blockchain node may also allow all the data (i.e. the foregoing first cache data and second cache data) in the first block cache for the first block to be written into the blockchain database on the basis of the longest chain selection policy when subsequently determining that the first block also belongs to the longest chain including the blockchain divergence.

It is to be understood that due to limited memory resources of a local memory of the blockchain node, in order to ensure that the blockchain node may provide adaptive memory computing resources, in this embodiment of the present disclosure, the data amount cached in the node memory may also be dynamically monitored; and when it is determined that the data amount cached in the node memory reaches a cache threshold, blocks (i.e. some blocks that are cached in the blockchain divergence and have earlier generation timestamps) that satisfy a cache duration condition in the blockchain divergence are determined to be blocks to be destroyed. In this way, the blockchain node may perform block destruction processing on the blocks to be destroyed in the blockchain divergence, so as to effectively manage and utilize the memory resources of the node memory.

It can be seen that in this embodiment of the present disclosure, by means of the provided cache management mechanism that supports divergence, after the transaction execution result of the transaction of a currently executed certain block (i.e. the first block) is written into the first block cache, the first block may be temporarily stored on the blockchain divergence of the node memory. For example, in this embodiment of the present disclosure, a block hash value of a previous block (for example, the second block) may be positioned on the blockchain divergence according to a father block hash value in a block header of the first block, so that the first block may be added to a branch chain where the second block on the blockchain divergence is located. It is to be understood that the blockchain divergence here may be a local blockchain that supports the divergence characteristic in the node memory. Based on this, in an embodiment of the present disclosure, a hash relationship table for associating block heights with block hash values may also be dynamically maintained in real time in the node memory. Other blocks with the same block height as that of the currently submitted target block may be quickly found through the hash relationship table, and the found blocks and blocks have the same block height as that of the currently submitted target block in the node memory may be collectively referred to as a bifurcated block. In this way, when clearing away the uploaded data in the write cache (i.e. the target block cache) of the target block in the node memory, the blockchain node may also clear the data in the write caches (i.e. the diverged block cache) of all the bifurcated blocks in the node memory, so that it can ensure that the data written into the target blockchain all belong to the data of the longest chain, and the waste of storage resources on the chain can be avoided. Obviously, in this embodiment of the present disclosure, by introducing the cache management mechanism that supports divergence, the memory resources of the node memory can be effectively utilized, thereby reducing the access load to the blockchain database; and the data access efficiency can be improved in the node memory. In addition, it is to be understood that the target blockchain involved in this embodiment of the present disclosure will not have a block divergence phenomenon, which means that the blockchain node does not need to perform version rollback on the target blockchain, so that it is not necessary to maintain a complicated blockchain divergence state on the target blockchain.

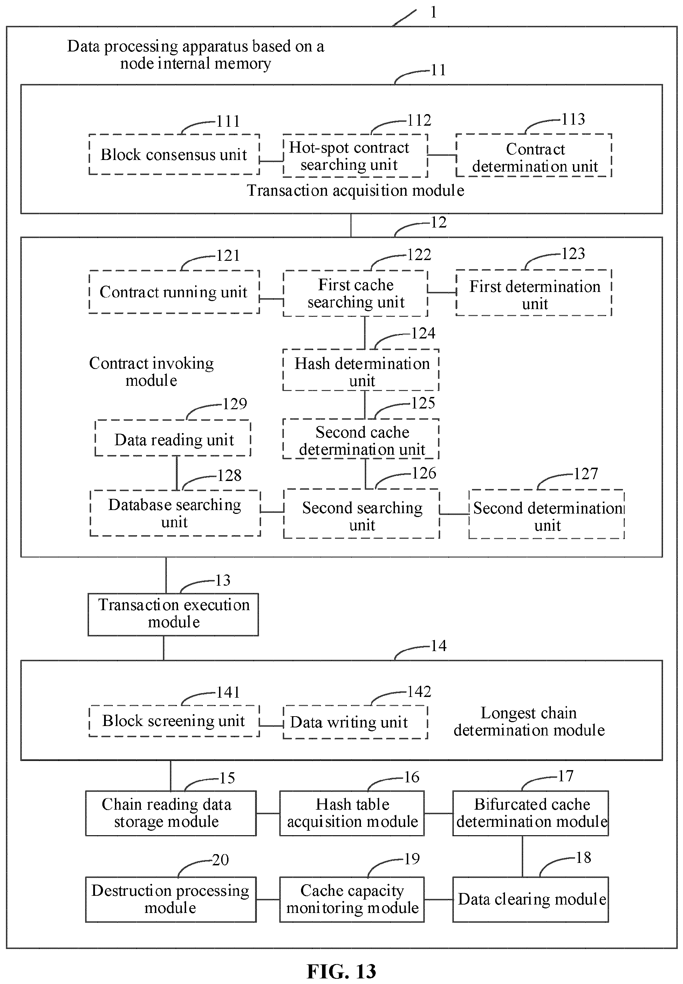

Referring to FIG. 13, FIG. 13 is a schematic structural diagram of a data processing apparatus based on a node memory according to the present disclosure. As shown in FIG. 13, a data processing apparatus 1 based on a node memory may be applied to any blockchain node in the consensus network. For example, the data processing apparatus 1 may be applied to the node 10c in the embodiment corresponding to FIG. 1. As shown in FIG. 13, the data processing apparatus 1 based on the node memory may include: a transaction acquisition module 11, a contract invoking module 12, and a transaction execution module 13; and may further include a longest chain determination module 14. The data processing apparatus 1 based on the node memory may further include: a chain reading data storage module 15, a hash table acquisition module 16, a bifurcated cache determination module 17, a data clearing module 18, a cache capacity monitoring module 19, and a destruction processing module 20.

The transaction acquisition module 11 is configured to acquire a transaction in a first block that is to be written into a blockchain divergence in the node memory, and acquire a data reading contract associated with the transaction from a chain reading cache in the node memory; and the first block is a block to be written into a blockchain divergence in the node memory.

The transaction acquisition module 11 includes: a block consensus unit 111, a hot-spot contract searching unit 112, and a contract determination unit 113.

The block consensus unit 111 is configured to acquire the first block containing the transaction, and generate a transaction processing instruction used for verifying the transaction in the first block when performing consensus processing on the first block; the transaction processing instruction contains a hot-spot reading auxiliary parameter associated with the transaction; and the hot-spot reading auxiliary parameter includes: a contract invoking address for executing a transaction contract of the transaction.

The hot-spot contract searching unit 112 is configured to extract the contract invoking address from the transaction processing instruction, and search the chain reading cache in the node memory for a hot-spot contract matched with a contract name mapped to the contract invoking address on the basis of the contract invoking address; and the hot-spot contract is stored in the chain reading cache and has been accessed for a cumulative number of times greater than an access threshold.

The contract determination unit 113 is configured to determine the hot-spot contract matched with the contract name as the data reading contract associated with the transaction.

For the specific implementation of the block consensus unit 111, the hot-spot contract searching unit 112, the contract determination unit 113, reference may be made to the description about S101 in the embodiment corresponding to FIG. 3, and details are not described herein again.

The transaction acquisition module 11 is further configured to acquire the data reading contract from a blockchain database associated with the node memory in a case that the data reading contract associated with the transaction is not acquired in the chain reading cache.

The contract invoking module 12 is configured to invoke the data reading contract to acquire a write cache mapping table associated with the first block, and determine, on the basis of a first block cache for the first block that is recorded in the write cache mapping table, target read data for executing the transaction.

The transaction includes: a target transaction for asset transferring initiated by a first user to a second user; a contract function in the data reading contract includes a first execution function and a second execution function; the first execution function is used for reading first asset data in a user account address of the first user; and the second execution function is used for reading a user account address of the second user.

The contract invoking module 12 includes: a contract running unit 121, a first cache searching unit 122, and a first determination unit 123. The contract invoking module 12 further includes: a hash determination unit 124, a second cache determination unit 125, a second searching unit 126, a second determination unit 127, a database searching unit 128, and a data reading unit 129.

The contract running unit 121 is configured to acquire the write cache mapping table associated with the first block when the data reading contract is run in a virtual machine, take a write cache mapped to a first block hash value of the first block as the first block cache in the write cache mapping table, and acquire a historical execution result of a historical transaction stored in the first block cache, a transaction execution order of the historical transaction being earlier than a transaction execution order of the target transaction.

The first cache searching unit 122 is configured to search the historical execution result of the first block cache for the user account address of the first user according to the first execution function in the data reading contract, and search the historical execution result of the first block cache for the user account address of the second user according to the second execution function in the data reading contract.

The first determination unit 123 is configured to read the first asset data of the first user from the user account address of the first user in a case that the user account address of the first user is found in the first block cache.

The first determination unit 123 is further configured to determine the read first asset data and the user account address of the second user to be asset reading data of the target transaction in a case that the user account address of the second user is found in the first block cache, and determine the target read data for executing the transaction on the basis of the asset reading data.

For the specific implementation of the contract running unit 121, the first cache searching unit 122, the first determination unit 123, reference may be made to the description about S102 in the embodiment corresponding to FIG. 3, and details are not described herein again.

The blockchain divergence contains a second block; the second block is a previous block of the first block; and the write cache mapping table contains a second block hash value of the second block.

The hash determination unit 124 is configured to determine a block header of the first block in the blockchain divergence on the basis of the first block hash value mapped to the first block cache in a case that the user account address of the first user is not found in the first block cache, and obtain a father block hash value of the first block as the second block hash value of the second block in the block header of the first block.

The second cache determination unit 125 is configured to determine the write cache mapped to the second block hash value as a second block cache in the write cache mapping relationship table; and a logical query level of the second block cache is lower than a logical query level of the first block cache.

The second searching unit 126 is configured to query the user account address of the first user in the second block cache.

The second determination unit 127 is configured to read the first asset data of the first user from the user account address of the first user in a case that the user account address of the first user is queried in the second block cache.

The blockchain divergence contains a first branch chain. In a case that the first branch chain contains a third block and a fourth block, the third block is a previous block of the second block, and a block generation timestamp of the fourth block is earlier than a block generation timestamp of the third block; the write cache mapping table contains a third block hash value of the third block and a fourth block hash value of the fourth block; and a logical query level of a third block cache mapped to the third block hash value is lower than the logical query level of the second block cache, and a logical query level of a fourth block cache mapped to the fourth block hash value is lower than the logical query level of the third block cache.

The database searching unit 128 is configured to query the user account address of the first user in a blockchain database corresponding to the target blockchain in a case that the user account address of the first user is not found in the second block cache and that the user account address of the first user is not found in both the third block cache and the fourth block cache.

The data reading unit 129 is configured to read the first asset data of the first user from the user account address of the first user in a case that the user account address of the first user is queried in the blockchain database.

The specific implementations of the hash determination unit 124, the second cache determination unit 125, the second searching unit 126, the second determination unit 127, the database searching unit 128, and the data reading unit 129 may refer to the descriptions of the specific process of querying the multi-level cache on the basis of hash relationships in the embodiment corresponding to FIG. 3, and will not repeatedly described here.

The transaction execution module 13 is configured to execute the transaction by using the target read data, store a target execution result corresponding to the transaction as target cache data in the first block cache, and write the first block into the blockchain divergence.

The data processing apparatus 1 based on the node memory may further include the longest chain determination module 14.

The longest chain determination module 14 is configured to acquire a target block associated with the first block, and write data in a target block cache for the target block into a blockchain database corresponding to the target blockchain in response to determining, in the node memory, that the target block belongs to the longest chain including the blockchain divergence; and a block generation timestamp of the target block is greater than the block generation timestamp of the first block.

The longest chain determination module 14 includes: a block determining unit 141 and a data writing unit 142.

The block determining unit 141 is configured to acquire a longest chain selection policy associated with the first block, determine, on the basis of a block height of the first block, a block that satisfies the longest chain selection policy in the blockchain divergence as the target block associated with the first block; and the target block is cached in the node memory and is historically written into the blockchain divergence.

The data writing unit 142 is configured to write the target block into the target blockchain in response to determining, in the node memory, that the target block belongs to the longest chain including the blockchain divergence, and write data in the target block cache for the target block into the blockchain database corresponding to the target blockchain.

For the specific implementation of the block determining unit 141 and the data writing unit 142, reference may be made to the description about S104 in the embodiment corresponding to FIG. 3, and details are not described herein again.

The longest chain determination module 14 is further configured to write the target cache data in the first block cache into the blockchain database corresponding to the target blockchain in response to determining, in the node memory, that the first block belongs to the longest chain including the blockchain divergence.

In a case that the transaction includes a first transaction and a second transaction, the target cache data includes first cache data corresponding to the first transaction and second cache data corresponding to the second transaction; the second transaction is previous to the first transaction;

the longest chain determination module 14 is configured to write the first cache data in the first block cache into the blockchain database corresponding to the target blockchain, and write the second cache data in the first block cache into the blockchain database.

The chain reading cache contains: historical chain data; the historical chain data includes data that is successfully written into a historical block cache of the target blockchain at a historical time instant; and the historical block cache is a write cache of a historical block in the blockchain divergence, and a block generation timestamp of the historical block is earlier than a block generation timestamp of the target block.

The chain reading data storage module 15 is configured to determine the data in the target block cache as target chain data on the target blockchain, write the target chain data into the chain reading cache, and update the historical chain data in the chain reading cache with the target chain data.

The blockchain divergence includes a diverged block with a same block height as the target block.

The hash table acquisition module 16 is configured to determine a target block height of the target block in the blockchain divergence, acquire a hash relationship table from the node memory, and determine a target list column where the target block height is located in the hash relationship table.

The bifurcated cache determination module 17 is configured to acquire a diverged block hash value of the diverged block from the target list column, and determine a diverged block cache corresponding to the diverged block hash value in the write cache mapping relationship table.

The data clearing module 18 is configured to clear the target chain data in the target block cache, and clear the diverged block cache.

The cache capacity monitoring module 19 is configured to determine a block that satisfies a cache duration condition in the blockchain divergence to be a block to be destroyed in response to determining that a data amount cached in the node memory reaches a cache threshold.

The destruction processing module 20 is configured to perform block destruction processing on the block to be destroyed in the blockchain divergence.

For the specific implementation of the transaction acquisition module 11, the contract invoking module 12, the transaction execution module 13, and the longest chain determination module 14, reference may be made to the description about S101 to S104 in the embodiment corresponding to FIG. 3, and details are not described herein again. The specific implementations of the chain reading data storage module 15, the hash table acquisition module 16, the bifurcated cache determination module 17, the data clearing module 18, the cache capacity monitoring module 19, and the destruction processing module 20 may refer to the descriptions of S201-S208 in the embodiment corresponding to FIG. 10, and will not repeatedly described here. It may be understood that, the description of beneficial effects of the same method is not described herein again.

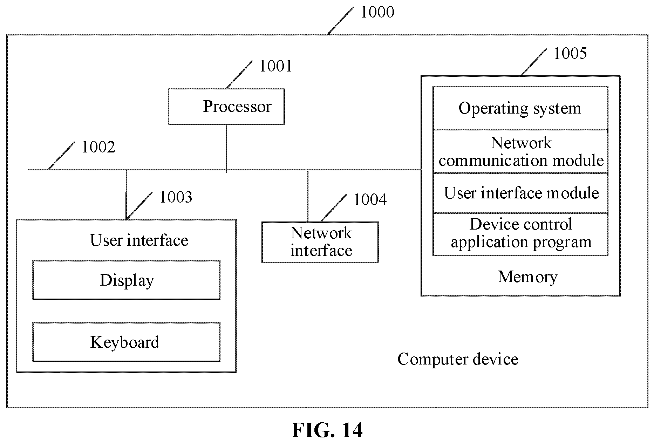

Referring to FIG. 14, FIG. 14 is a schematic structural diagram of a computer device according to an embodiment of the present disclosure. As shown in FIG. 14, a computer device 1000 may be applied to the blockchain node in the embodiment corresponding to FIG. 1. The computer device 1000 may include: a processor 1001, a network interface 1004, and a memory 1005. In addition, the computer device 1000 may further include: a user interface 1003 and at least one communication bus 1002. The communication bus 1002 is configured to implement connection and communication between these components. The user interface 1003 may include a display, a keyboard, and optionally, the user interface 1003 may further include a standard wired interface and a standard wireless interface. Optionally, the network interface 1004 may include a standard wired interface and a standard wireless interface (such as a Wi-Fi interface). The memory 1004 may be a high-speed RAM, or may be a non-volatile memory, for example, at least one magnetic disk memory. Optionally, the memory 1005 may be at least one storage apparatus that is located far away from the foregoing processor 1001. As shown in FIG. 14, the memory 1005 used as a computer storage medium may include an operating system, a network communication module, a user interface module, and a device-control application program.

The network interface 1004 in the computer device 1000 may further provide a network communication function, and the optional user interface 1003 may further include a display and a keyboard. In the computer device 1000 shown in FIG 14, the network interface 1004 may provide a network communication function, and the user interface 1003 is mainly configured to provide an input interface for a user. The processor 1001 may be configured to invoke a device control application program stored in the memory 1005, so as to:
acquire a transaction in a first block that is to be written into a blockchain divergence in the node memory, and acquire a data reading contract associated with the transaction from a chain reading cache in the node memory;.
acquire a write cache mapping table associated with the first block by invoking the data reading contract, and determine, on the basis of a first block cache for the first block that is recorded in the write cache mapping table, target read data for executing the transaction on the basis of a first block cache for the first block that is recorded in the write cache mapping table; and
execute the transaction by using the target read data, store a target execution result corresponding to the transaction as target cache data in the first block cache, and write the first block into the blockchain divergence.

It is to be understood that the computer device 1000 described in this embodiment of the present disclosure may implement the descriptions of the data processing method based on a node memory in the foregoing embodiments corresponding to FIG. 3 or FIG. 10, and may also implement the data processing apparatus 1 based on a node memory in the foregoing embodiment corresponding to FIG. 13. Details are not described herein again. In addition, the description of beneficial effects of using the same method are not described herein again.

In addition, it is to be pointed out that: an embodiment of the present disclosure further provides a computer storage medium. The computer storage medium stores a computer program executed by the data processing apparatus 1 based on a node memory mentioned above, and the computer program includes program instructions. When executing the program instructions, the processor may implement the descriptions of the data processing method based on a node memory in the foregoing corresponding embodiments corresponding to FIG. 3 or FIG. 10. Therefore, details are not described herein again. In addition, the description of beneficial effects of using the same method are not described herein again. For technical details that are not disclosed in the embodiment of the computer storage medium of the present disclosure, refer to the descriptions of the method embodiments of the present disclosure.

A person of ordinary skill in the art may understand that all or some of the processes of the methods in the foregoing embodiments may be implemented by a computer program instructing relevant hardware. The program may be stored in a computer-readable storage medium. During the execution of the program, processes of the foregoing method embodiments may be included. The storage medium may be a magnetic disk, an optical disc, a read-only memory (ROM), a random access memory (RAM), or the like.

What are disclosed above are merely examples of embodiments of the present disclosure, and certainly are not intended to limit the protection scope of the present disclosure. Therefore, equivalent variations made in accordance with the claims of the present disclosure shall fall within the scope of the present disclosure.

## Claims

1. A data processing method based on a node memory, the method being implemented by a blockchain node, wherein the method comprises:
acquiring (S101) a transaction in a first block that is to be written into a blockchain divergence in the node memory, wherein the blockchain divergence is a local blockchain that supports divergence, and acquiring a data reading contract associated with the transaction from a chain reading cache in the node memory;
acquiring (S102) a write cache mapping table associated with the first block by invoking the data reading contract, and determining, on the basis of a first block cache for the first block, wherein the first block cache is recorded in the write cache mapping table, target read data for executing the transaction; and
executing (S103) the transaction by using the target read data, storing a target execution result corresponding to the transaction as target cache data in the first block cache, and writing the first block into the blockchain divergence.

2. The method according to claim 1, wherein the chain reading cache is established for a target blockchain in a cache space of the node memory, and is configured to temporarily store hot-spot data that is frequently accessed and that comprises the data reading contract.

3. The method according to claim 1, further comprising:
acquiring a target block associated with the first block, and writing data in a target block cache for the target block into a blockchain database corresponding to the target blockchain in response to determining, in the node memory, that the target block belongs to a longest chain comprising the blockchain divergence; a block generation timestamp of the target block being earlier than a block generation timestamp of the first block.

4. The method according to claim 1, wherein the acquiring (S101) a transaction in a first block, and acquiring a data reading contract associated with the transaction from a chain reading cache in the node memory comprises:
acquiring the first block containing the transaction, and generating, during performing consensus processing on the first block, a transaction processing instruction for verifying the transaction in the first block; the transaction processing instruction containing a hot-spot reading auxiliary parameter that is associated with the transaction and that comprises a contract invoking address for executing a transaction contract of the transaction;
extracting the contract invoking address from the transaction processing instruction, and searching the chain reading cache in the node memory for a hot-spot contract matched with a contract name mapped to the contract invoking address; the hot-spot contract being stored in the chain reading cache and has been accessed for a cumulative number of times greater than an access threshold; and
determining the hot-spot contract matched with the contract name as the data reading contract associated with the transaction.

5. The method according to claim 1, wherein the transaction comprises a target transaction for asset transferring initiated by a first user to a second user; a contract function in the data reading contract comprising a first execution function and a second execution function; the first execution function being used for reading first asset data in a user account address of the first user; the second execution function being used for reading a user account address of the second user;
the acquiring (S102) a write cache mapping table associated with the first block by invoking the data reading contract, and determining, on the basis of a first block cache for the first block that is recorded in the write cache mapping table, target read data for executing the transaction on the basis of a first block cache for the first block that is recorded in the write cache mapping table comprises:
acquiring the write cache mapping table associated with the first block when the data reading contract is run in a virtual machine, taking a write cache mapped to a first block hash value of the first block as the first block cache in the write cache mapping table, and acquiring a historical execution result of a historical transaction stored in the first block cache, a transaction execution order of the historical transaction being earlier than a transaction execution order of the target transaction;
searching the historical execution result of the first block cache for the user account address of the first user according to the first execution function in the data reading contract, and searching the historical execution result of the first block cache for the user account address of the second user according to the second execution function in the data reading contract;
reading the first asset data of the first user from the user account address of the first user in a case that the user account address of the first user is found in the first block cache; and
determining the first asset data and the user account address of the second user to be asset reading data of the target transaction in a case that the user account address of the second user is found in the first block cache, and determining the target read data for executing the transaction on the basis of the asset reading data.

6. The method according to claim 5, wherein the blockchain divergence contains a second block previous to the first block, and the write cache mapping table contains a second block hash value of the second block; and
the method further comprises:
determining a block header of the first block in the blockchain divergence on the basis of the first block hash value mapped to the first block cache in a case that the user account address of the first user is not found in the first block cache, and obtaining a father block hash value of the first block as the second block hash value of the second block in the block header of the first block;
determining the write cache mapped to the second block hash value as a second block cache in the write cache mapping relationship table, a logical query level of the second block cache being lower than a logical query level of the first block cache;
querying the user account address of the first user in the second block cache; and
reading the first asset data of the first user from the user account address of the first user in a case that the user account address of the first user is queried in the second block cache.

7. The method according to claim 6, wherein the blockchain divergence contains a first branch chain; in a case that the first branch chain contains a third block and a fourth block, the third block being a previous block of the second block, and a block generation timestamp of the fourth block being earlier than a block generation timestamp of the third block; the write cache mapping table containing a third block hash value of the third block and a fourth block hash value of the fourth block; a logical query level of a third block cache mapped to the third block hash value being lower than the logical query level of the second block cache, and a logical query level of a fourth block cache mapped to the fourth block hash value being lower than the logical query level of the third block cache;
the method further comprises:
querying the user account address of the first user in a blockchain database corresponding to the target blockchain in a case that the user account address of the first user is not found in the second block cache, the third block cache and the fourth block cache; and
reading the first asset data of the first user from the user account address of the first user in a case that the user account address of the first user is queried in the blockchain database.

8. The method according to claim 3, wherein the acquiring a target block associated with the first block, and writing data in a target block cache for the target block into a blockchain database corresponding to the target blockchain in response to determining, in the node memory, that the target block belongs to a longest chain comprising the blockchain divergence comprises:
acquiring a longest chain selection policy associated with the first block, determining, on the basis of a block height of the first block, a block that satisfies the longest chain selection policy in the blockchain divergence as the target block associated with the first block, the target block being cached in the node memory and being historically written into the blockchain divergence; and
writing the target block into the target blockchain in response to determining, in the node memory, that the target block belongs to the longest chain comprising the blockchain divergence, and writing data in the target block cache for the target block into the blockchain database corresponding to the target blockchain.

9. The method according to claim 8, wherein the chain reading cache contains historical chain data comprising data that is successfully written into a historical block cache for the target blockchain at a historical time instant; the historical block cache being a write cache for a historical block in the blockchain divergence, and a block generation timestamp of the historical block being earlier than a block generation timestamp of the target block;
the method further comprises:
determining the data in the target block cache as target chain data on the target blockchain, writing the target chain data into the chain reading cache, and updating the historical chain data in the chain reading cache with the target chain data.

10. The method according to claim 9, wherein the blockchain divergence comprises a diverged block with a same block height as the target block;
the method further comprises:
determining a target block height of the target block in the blockchain divergence, acquiring a hash relationship table from the node memory, and determining a target list column in the hash relationship table where the target block height is located;
acquiring a diverged block hash value of the diverged block from the target list column, and determining a diverged block cache corresponding to the diverged block hash value in the write cache mapping relationship table; and
clearing the target chain data from the target block cache, and clearing the diverged block cache.

11. The method according to claim 1, further comprising:
acquiring the data reading contract from a blockchain database associated with the node memory in a case that the data reading contract associated with the transaction is not acquired in the chain reading cache.

12. The method according to claim 3, further comprising:
writing the target cache data in the first block cache into the blockchain database corresponding to the target blockchain in response to determining, in the node memory, that the first block belongs to the longest chain comprising the blockchain divergence.

13. The method according to claim 12, wherein in a case that the transaction comprises a first transaction and a second transaction, the target cache data comprises first cache data corresponding to the first transaction and second cache data corresponding to the second transaction; the second transaction being previous to the first transaction;
the writing the target cache data in the first block cache into the blockchain database corresponding to the target blockchain comprises:
writing the first cache data in the first block cache into the blockchain database corresponding to the target blockchain, and writing the second cache data in the first block cache into the blockchain database.

14. A computer device, **characterized by** comprising: a processor and a memory,
the processor being connected to the memory, the memory being configured to store a computer program, and the processor being configured to invoke the computer program, to cause the computer program to perform the method according to any one of claims 1 to 13.

15. A computer-readable storage medium, storing a computer program, **characterized in that**, the computer program being loaded and executed by a processor to cause a computer device with the processor to perform the method according to any one of claims 1 to 13.

## Patentansprüche

1. Datenverarbeitungsverfahren basierend auf einem Knotenspeicher, wobei das Verfahren durch einen Blockchain-Knoten implementiert wird, wobei das Verfahren Folgendes umfasst:
Erwerben (S101) einer Transaktion in einem ersten Block, der in eine Blockchain-Divergenz in den Knotenspeicher geschrieben werden soll, wobei die Blockchain-Divergenz eine lokale Blockchain ist, die Divergenz unterstützt, und Erwerben eines Datenlesevertrags, der mit der Transaktion verbunden ist, aus einem Ketten-Lese-Cache im Knotenspeicher;
Erwerben (S102) einer Schreib-Cache-Zuordnungstabelle, die mit dem ersten Block verbunden ist, durch Aufrufen des Datenlesevertrags, und Bestimmen, auf der Grundlage eines Erster-Block-Cache für den ersten Block, wobei der Erster-Block-Cache in der Schreib-Cache-Zuordnungstabelle aufgezeichnet ist, von Ziel-Lesedaten zum Ausführen der Transaktion; und
Ausführen (S103) der Transaktion unter Verwendung der Ziel-Lesedaten, Speichern eines der Transaktion entsprechenden Ziel-Ausführungsergebnisses als Ziel-Cache-Daten in dem Erster-Block-Cache und Schreiben des ersten Blocks in die Blockchain-Divergenz.

2. Verfahren nach Anspruch 1, wobei der Ketten-Lese-Cache für eine Ziel-Blockchain in einem Cache-Bereich des Knotenspeichers eingerichtet ist und dazu konfiguriert ist, Hotspot-Daten, die häufig abgerufen werden und den Datenlesevertrag umfassen, vorübergehend zu speichern.

3. Verfahren nach Anspruch 1, weiterhin umfassend:
Erwerben eines Zielblocks, der mit dem ersten Block verbunden ist, und Schreiben von Daten in einem Zielblock-Cache für den Zielblock in eine Blockchain-Datenbank, die der Ziel-Blockchain entspricht, als Reaktion auf die Bestimmung im Knotenspeicher, dass der Zielblock zu einer längsten Kette gehört, die die Blockchain-Divergenz umfasst; wobei ein Blockerzeugungszeitstempel des Zielblocks früher ist als ein Blockerzeugungszeitstempel des ersten Blocks.

4. Verfahren nach Anspruch 1, wobei das Erwerben (S101) einer Transaktion in einem ersten Block und das Erwerben eines Datenlesevertrags, der mit der Transaktion verbunden ist, aus einem Ketten-Lese-Cache im Knotenspeicher Folgendes umfasst:
Erwerben des ersten Blocks, der die Transaktion enthält, und Erzeugen, während der Durchführung der Konsensverarbeitung an dem ersten Block, einer Transaktionsverarbeitungsanweisung zur Überprüfung der Transaktion in dem ersten Block; wobei die Transaktionsverarbeitungsanweisung einen mit der Transaktion verbundenen Hotspot-Lese-Hilfsparameter enthält und eine Vertragsaufrufadresse zum Ausführen eines Transaktionsvertrags der Transaktion umfasst;
Extrahieren der Vertragsaufrufadresse aus der Transaktionsverarbeitungsanweisung und Suchen im Ketten-Lese-Cache im Knotenspeicher nach einem Hotspot-Vertrag, der zu einem Vertragsnamen passt, der der Vertragsaufrufadresse zugeordnet ist; wobei der Hotspot-Vertrag im Ketten-Lese-Cache gespeichert ist und eine kumulative Anzahl von Zugriffen aufweist, die einen Zugriffsschwellenwert übersteigt; und
Bestimmen des mit dem Vertragsnamen übereinstimmenden Hotspot-Vertrags als den mit der Transaktion verbundenen Datenlesevertrag.

5. Verfahren nach Anspruch 1, wobei die Transaktion eine von einem ersten Benutzer an einen zweiten Benutzer initiierte Ziel-Transaktion zur Vermögensübertragung umfasst; eine Vertragsfunktion im Datenlesevertrag eine erste Ausführungsfunktion und eine zweite Ausführungsfunktion umfasst; wobei die erste Ausführungsfunktion zum Lesen von ersten Vermögensdaten in einer Benutzerkontoadresse des ersten Benutzers verwendet wird; wobei die zweite Ausführungsfunktion zum Lesen einer Benutzerkontoadresse des zweiten Benutzers verwendet wird;
das Erwerben (S102) einer Schreib-Cache-Zuordnungstabelle, die mit dem ersten Block verbunden ist, durch Aufrufen des Datenlesevertrags, und das Bestimmen, auf der Grundlage eines in der Schreib-Cache-Zuordnungstabelle aufgezeichneten Erster-Block-Cache für den ersten Block, von Ziel-Lesedaten zum Ausführen der Transaktion auf der Grundlage eines in der Schreib-Cache-Zuordnungstabelle aufgezeichneten Erster-Block-Cache für den ersten Block Folgendes umfasst:
Erwerben der Schreib-Cache-Zuordnungstabelle, die mit dem ersten Block verbunden ist, wenn der Datenlesevertrag in einer virtuellen Maschine ausgeführt wird, Nehmen eines einem ersten Block-Hash-Wert des ersten Blocks zugeordneten Schreib-Cache als Erster-Block-Cache in der Schreib-Cache-Zuordnungstabelle, und Erwerben eines historischen Ausführungsergebnisses einer im Erster-Block-Cache gespeicherten historischen Transaktion, wobei eine Transaktionsausführungsreihenfolge der historischen Transaktion früher ist als eine Transaktionsausführungsreihenfolge der Ziel-Transaktion;
Suchen im historischen Ausführungsergebnis des Erster-Block-Cache nach der Benutzerkontoadresse des ersten Benutzers gemäß der ersten Ausführungsfunktion im Datenlesevertrag, und Suchen im historischen Ausführungsergebnis des Erster-Block-Cache nach der Benutzerkontoadresse des zweiten Benutzers gemäß der zweiten Ausführungsfunktion im Datenlesevertrag;
Lesen der ersten Vermögensdaten des ersten Benutzers aus der Benutzerkontoadresse des ersten Benutzers für den Fall, dass die Benutzerkontoadresse des ersten Benutzers im Erster-Block-Cache gefunden wird; und
Bestimmen der ersten Vermögensdaten und der Benutzerkontoadresse des zweiten Benutzers als Vermögenslesedaten der Ziel-Transaktion für den Fall, dass die Benutzerkontoadresse des zweiten Benutzers im Erster-Block-Cache gefunden wird, und Bestimmen der Ziel-Lesedaten zum Ausführen der Transaktion auf der Grundlage der Vermögenslesedaten.

6. Verfahren nach Anspruch 5, wobei die Blockchain-Divergenz einen zweiten Block enthält, der dem ersten Block vorausgeht, und die Schreib-Cache-Zuordnungstabelle einen zweiten Block-Hash-Wert des zweiten Blocks enthält; und
das Verfahren weiterhin umfasst:
Bestimmen eines Blockkopfes des ersten Blocks in der Blockchain-Divergenz auf der Grundlage des dem Erster-Block-Cache zugeordneten ersten Block-Hash-Werts für den Fall, dass die Benutzerkontoadresse des ersten Benutzers nicht im Erster-Block-Cache gefunden wird, und Erhalten eines Vater-Block-Hash-Werts des ersten Blocks als zweiten Block-Hash-Wert des zweiten Blocks im Blockkopf des ersten Blocks;
Bestimmen des dem zweiten Block-Hash-Wert zugeordneten Schreib-Cache als zweiten Block-Cache in der Schreib-Cache-Zuordnungsbeziehungstabelle, wobei ein logischer Abfragegrad des zweiten Block-Cache niedriger ist als ein logischer Abfragegrad des ersten Block-Cache;
Abfragen der Benutzerkontoadresse des ersten Benutzers im zweiten Block-Cache; und
Lesen der ersten Vermögensdaten des ersten Benutzers aus der Benutzerkontoadresse des ersten Benutzers für den Fall, dass die Benutzerkontoadresse des ersten Benutzers im zweiten Block-Cache abgefragt wird.

7. Verfahren nach Anspruch 6, wobei die Blockchain-Divergenz eine erste Verzweigungskette enthält; für den Fall, dass die erste Verzweigungskette einen dritten Block und einen vierten Block enthält, wobei der dritte Block ein dem zweiten Block vorausgehender Block ist und ein Blockerzeugungszeitstempel des vierten Blocks früher ist als ein Blockerzeugungszeitstempel des dritten Blocks; wobei die Schreib-Cache-Zuordnungstabelle einen dritten Block-Hash-Wert des dritten Blocks und einen vierten Block-Hash-Wert des vierten Blocks enthält; wobei ein logischer Abfragegrad eines dritten Block-Cache, der dem dritten Block-Hash-Wert zugeordnet ist, niedriger ist als der logische Abfragegrad des zweiten Block-Cache, und ein logischer Abfragegrad eines vierten Block-Cache, der dem vierten Block-Hash-Wert zugeordnet ist, niedriger ist als der logische Abfragegrad des dritten Block-Cache;
das Verfahren weiterhin umfasst:
Abfragen der Benutzerkontoadresse des ersten Benutzers in einer der Ziel-Blockchain entsprechenden Blockchain-Datenbank für den Fall, dass die Benutzerkontoadresse des ersten Benutzers weder im zweiten Block-Cache noch im dritten Block-Cache noch im vierten Block-Cache gefunden wird; und
Lesen der ersten Vermögensdaten des ersten Benutzers aus der Benutzerkontoadresse des ersten Benutzers für den Fall, dass die Benutzerkontoadresse des ersten Benutzers in der Blockchain-Datenbank abgefragt wird.

8. Verfahren nach Anspruch 3, wobei das Erwerben eines Zielblocks, der mit dem ersten Block verbunden ist, und das Schreiben von Daten in einem Zielblock-Cache für den Zielblock in eine der Ziel-Blockchain entsprechende Blockchain-Datenbank als Reaktion auf die Bestimmung im Knotenspeicher, dass der Zielblock zur längsten Kette gehört, die die Blockchain-Divergenz umfasst, Folgendes umfasst:
Erwerben einer mit dem ersten Block verbundenen Längste-Kette-Auswahlrichtlinie, Bestimmen, auf der Grundlage einer Blockhöhe des ersten Blocks, eines Blocks, der die Längste-Kette-Auswahlrichtlinie in der Blockchain-Divergenz erfüllt, als den mit dem ersten Block verbundenen Zielblock, wobei der Zielblock im Knotenspeicher gecacht ist und historisch in die Blockchain-Divergenz geschrieben wurde; und
Schreiben des Zielblocks in die Ziel-Blockchain als Reaktion auf die Bestimmung im Knotenspeicher, dass der Zielblock zur längsten Kette gehört, die die Blockchain-Divergenz umfasst, und Schreiben von Daten in dem Zielblock-Cache für den Zielblock in die der Ziel-Blockchain entsprechende Blockchain-Datenbank.

9. Verfahren nach Anspruch 8, wobei der Ketten-Lese-Cache historische Kettendaten enthält, die Daten umfassen, die zu einem historischen Zeitpunkt erfolgreich in einen historischen Block-Cache der Ziel-Blockchain geschrieben wurden; wobei der historische Block-Cache ein Schreib-Cache eines historischen Blocks in der Blockchain-Divergenz ist und ein Blockerzeugungszeitstempel des historischen Blocks früher ist als ein Blockerzeugungszeitstempel des Zielblocks;
das Verfahren weiterhin umfasst:
Bestimmen der Daten im Zielblock-Cache als Ziel-Kettendaten auf der Ziel-Blockchain, Schreiben der Ziel-Kettendaten in den Ketten-Lese-Cache und Aktualisieren der historischen Kettendaten im Ketten-Lese-Cache mit den Ziel-Kettendaten.

10. Verfahren nach Anspruch 9, wobei die Blockchain-Divergenz einen divergierten Block mit derselben Blockhöhe wie der Zielblock umfasst;
das Verfahren weiterhin umfasst:
Bestimmen einer Zielblock-Höhe des Zielblocks in der Blockchain-Divergenz, Erwerben einer Hash-Beziehungstabelle aus dem Knotenspeicher und Bestimmen einer Ziellisten-Spalte in der Hash-Beziehungstabelle, in der sich die Zielblock-Höhe befindet;
Erwerben eines divergierten Block-Hash-Werts des divergierten Blocks aus der Ziellisten-Spalte und Bestimmen eines divergierten Block-Cache, der dem divergierten Block-Hash-Wert entspricht, in der Schreib-Cache-Zuordnungsbeziehungstabelle; und
Löschen der Ziel-Kettendaten aus dem Zielblock-Cache und Löschen des divergierten Block-Cache.

11. Verfahren nach Anspruch 1, weiterhin umfassend:
Erwerben des Datenlesevertrags aus einer dem Knotenspeicher zugeordneten Blockchain-Datenbank für den Fall, dass der mit der Transaktion verbundene Datenlesevertrag nicht im Ketten-Lese-Cache erworben wird.

12. Verfahren nach Anspruch 3, weiterhin umfassend:
Schreiben der Ziel-Cache-Daten im Erster-Block-Cache in die der Ziel-Blockchain entsprechende Blockchain-Datenbank als Reaktion auf die Bestimmung im Knotenspeicher, dass der erste Block zur längsten Kette gehört, die die Blockchain-Divergenz umfasst.

13. Verfahren nach Anspruch 12, wobei die Ziel-Cache-Daten für den Fall, dass die Transaktion eine erste Transaktion und eine zweite Transaktion umfasst, erste Cache-Daten, die der ersten Transaktion entsprechen, und zweite Cache-Daten, die der zweiten Transaktion entsprechen, umfassen; wobei die zweite Transaktion der ersten Transaktion vorausgeht;
das Schreiben der Ziel-Cache-Daten im Erster-Block-Cache in die der Ziel-Blockchain entsprechende Blockchain-Datenbank Folgendes umfasst:
Schreiben der ersten Cache-Daten im Erster-Block-Cache in die der Ziel-Blockchain entsprechende Blockchain-Datenbank und Schreiben der zweiten Cache-Daten im Erster-Block-Cache in die Blockchain-Datenbank.

14. Computervorrichtung, **dadurch gekennzeichnet, dass** sie Folgendes umfasst: einen Prozessor und einen Speicher, wobei der Prozessor mit dem Speicher verbunden ist, der Speicher dazu konfiguriert ist, ein Computerprogramm zu speichern, und der Prozessor dazu konfiguriert ist, das Computerprogramm aufzurufen, um das Computerprogramm zu veranlassen, das Verfahren nach einem der Ansprüche 1 bis 13 auszuführen.

15. Computerlesbares Speichermedium, das ein Computerprogramm speichert, **dadurch gekennzeichnet, dass** das Computerprogramm von einem Prozessor geladen und ausgeführt wird, um eine Computervorrichtung mit dem Prozessor zu veranlassen, das Verfahren nach einem der Ansprüche 1 bis 13 auszuführen.

## Revendications

1. Procédé de traitement de données basé sur une mémoire de nœud, le procédé étant mis en œuvre par un nœud de chaîne de blocs, dans lequel le procédé comprend :
l'acquisition (S101) d'une transaction dans un premier bloc devant être écrit dans une divergence de chaîne de blocs dans la mémoire de nœud, dans lequel la divergence de chaîne de blocs est une chaîne de blocs locale prenant en charge la divergence, et l'acquisition d'un contrat de lecture de données associé à la transaction à partir d'un cache de lecture de chaîne dans la mémoire de nœud ;
l'acquisition (S102) d'une table de mappage de cache d'écriture associée au premier bloc en invoquant le contrat de lecture de données, et la détermination, sur la base d'un cache de premier bloc pour le premier bloc, dans lequel le cache de premier bloc est enregistré dans la table de mappage de cache d'écriture, de données de lecture cible pour l'exécution de la transaction ; et
l'exécution (S103) de la transaction en utilisant les données de lecture cible, le stockage d'un résultat d'exécution cible correspondant à la transaction en tant que données de cache cible dans le cache de premier bloc, et l'écriture du premier bloc dans la divergence de chaîne de blocs.

2. Procédé selon la revendication 1, dans lequel le cache de lecture de chaîne est établi pour une chaîne de blocs cible dans un espace de cache de la mémoire de nœud, et est configuré pour stocker temporairement des données à accès fréquent qui sont fréquemment accédées et qui comprennent le contrat de lecture de données.

3. Procédé selon la revendication 1, comprenant en outre :
l'acquisition d'un bloc cible associé au premier bloc, et l'écriture de données dans un cache de bloc cible pour le bloc cible dans une base de données de chaîne de blocs correspondant à la chaîne de blocs cible en réponse à la détermination, dans la mémoire de nœud, que le bloc cible appartient à une chaîne la plus longue comprenant la divergence de chaîne de blocs ; un horodatage de génération de bloc du bloc cible étant antérieur à un horodatage de génération de bloc du premier bloc.

4. Procédé selon la revendication 1, dans lequel l'acquisition (S101) d'une transaction dans un premier bloc, et l'acquisition d'un contrat de lecture de données associé à la transaction à partir d'un cache de lecture de chaîne dans la mémoire de nœud comprend :
l'acquisition du premier bloc contenant la transaction, et la génération, lors de l'exécution du traitement de consensus sur le premier bloc, d'une instruction de traitement de transaction pour la vérification de la transaction dans le premier bloc ; l'instruction de traitement de transaction contenant un paramètre auxiliaire de lecture à accès fréquent associé à la transaction et comprenant une adresse d'invocation de contrat pour l'exécution d'un contrat de transaction de la transaction ;
l'extraction de l'adresse d'invocation de contrat à partir de l'instruction de traitement de transaction, et la recherche dans le cache de lecture de chaîne dans la mémoire de nœud d'un contrat à accès fréquent correspondant à un nom de contrat mappé à l'adresse d'invocation de contrat ; le contrat à accès fréquent étant stocké dans le cache de lecture de chaîne et ayant fait l'objet d'un nombre cumulatif d'accès supérieur à un seuil d'accès ; et
la détermination du contrat à accès fréquent correspondant au nom de contrat en tant que contrat de lecture de données associé à la transaction.

5. Procédé selon la revendication 1, dans lequel la transaction comprend une transaction cible de transfert d'actifs initiée par un premier utilisateur à destination d'un second utilisateur ; une fonction de contrat dans le contrat de lecture de données comprenant une première fonction d'exécution et une seconde fonction d'exécution ; la première fonction d'exécution étant utilisée pour lire des premières données d'actifs dans une adresse de compte utilisateur du premier utilisateur ; la seconde fonction d'exécution étant utilisée pour lire une adresse de compte utilisateur du second utilisateur ;
l'acquisition (S102) d'une table de mappage de cache d'écriture associée au premier bloc en invoquant le contrat de lecture de données, et la détermination, sur la base d'un cache de premier bloc pour le premier bloc enregistré dans la table de mappage de cache d'écriture, de données de lecture cible pour l'exécution de la transaction sur la base d'un cache de premier bloc pour le premier bloc enregistré dans la table de mappage de cache d'écriture comprend :
l'acquisition de la table de mappage de cache d'écriture associée au premier bloc lorsque le contrat de lecture de données est exécuté dans une machine virtuelle, la prise d'un cache d'écriture mappé à une valeur de hachage de premier bloc du premier bloc en tant que cache de premier bloc dans la table de mappage de cache d'écriture, et l'acquisition d'un résultat d'exécution historique d'une transaction historique stocké dans le cache de premier bloc, un ordre d'exécution de transaction de la transaction historique étant antérieur à un ordre d'exécution de transaction de la transaction cible ;
la recherche dans le résultat d'exécution historique du cache de premier bloc de l'adresse de compte utilisateur du premier utilisateur selon la première fonction d'exécution dans le contrat de lecture de données, et la recherche dans le résultat d'exécution historique du cache de premier bloc de l'adresse de compte utilisateur du second utilisateur selon la seconde fonction d'exécution dans le contrat de lecture de données ;
la lecture des premières données d'actifs du premier utilisateur à partir de l'adresse de compte utilisateur du premier utilisateur dans le cas où l'adresse de compte utilisateur du premier utilisateur est trouvée dans le cache de premier bloc ; et
la détermination des premières données d'actifs et de l'adresse de compte utilisateur du second utilisateur en tant que données de lecture d'actifs de la transaction cible dans le cas où l'adresse de compte utilisateur du second utilisateur est trouvée dans le cache de premier bloc, et la détermination des données de lecture cible pour l'exécution de la transaction sur la base des données de lecture d'actifs.

6. Procédé selon la revendication 5, dans lequel la divergence de chaîne de blocs contient un second bloc précédant le premier bloc, et la table de mappage de cache d'écriture contient une valeur de hachage de second bloc du second bloc ; et
le procédé comprend en outre :
la détermination d'un en-tête de bloc du premier bloc dans la divergence de chaîne de blocs sur la base de la valeur de hachage de premier bloc mappée au cache de premier bloc dans le cas où l'adresse de compte utilisateur du premier utilisateur n'est pas trouvée dans le cache de premier bloc, et l'obtention d'une valeur de hachage de bloc père du premier bloc en tant que valeur de hachage de second bloc du second bloc dans l'en-tête de bloc du premier bloc ;
la détermination du cache d'écriture mappé à la valeur de hachage de second bloc en tant que cache de second bloc dans la table de mappage de relation de cache d'écriture, un niveau de requête logique du cache de second bloc étant inférieur à un niveau de requête logique du cache de premier bloc ;
la requête de l'adresse de compte utilisateur du premier utilisateur dans le cache de second bloc ; et
la lecture des premières données d'actifs du premier utilisateur à partir de l'adresse de compte utilisateur du premier utilisateur dans le cas où l'adresse de compte utilisateur du premier utilisateur est interrogée dans le cache de second bloc.

7. Procédé selon la revendication 6, dans lequel la divergence de chaîne de blocs contient une première chaîne de branche ; dans le cas où la première chaîne de branche contient un troisième bloc et un quatrième bloc, le troisième bloc étant un bloc précédant le second bloc, et un horodatage de génération de bloc du quatrième bloc étant antérieur à un horodatage de génération de bloc du troisième bloc ; la table de mappage de cache d'écriture contenant une valeur de hachage de troisième bloc du troisième bloc et une valeur de hachage de quatrième bloc du quatrième bloc ; un niveau de requête logique d'un cache de troisième bloc mappé à la valeur de hachage de troisième bloc étant inférieur au niveau de requête logique du cache de second bloc, et un niveau de requête logique d'un cache de quatrième bloc mappé à la valeur de hachage de quatrième bloc étant inférieur au niveau de requête logique du cache de troisième bloc ;
le procédé comprend en outre :
la requête de l'adresse de compte utilisateur du premier utilisateur dans une base de données de chaîne de blocs correspondant à la chaîne de blocs cible dans le cas où l'adresse de compte utilisateur du premier utilisateur n'est pas trouvée dans le cache de second bloc, le cache de troisième bloc et le cache de quatrième bloc ; et
la lecture des premières données d'actifs du premier utilisateur à partir de l'adresse de compte utilisateur du premier utilisateur dans le cas où l'adresse de compte utilisateur du premier utilisateur est interrogée dans la base de données de chaîne de blocs.

8. Procédé selon la revendication 3, dans lequel l'acquisition d'un bloc cible associé au premier bloc, et l'écriture de données dans un cache de bloc cible pour le bloc cible dans une base de données de chaîne de blocs correspondant à la chaîne de blocs cible en réponse à la détermination, dans la mémoire de nœud, que le bloc cible appartient à une chaîne la plus longue comprenant la divergence de chaîne de blocs comprend :
l'acquisition d'une politique de sélection de chaîne la plus longue associée au premier bloc, la détermination, sur la base d'une hauteur de bloc du premier bloc, d'un bloc satisfaisant la politique de sélection de chaîne la plus longue dans la divergence de chaîne de blocs en tant que bloc cible associé au premier bloc, le bloc cible étant mis en cache dans la mémoire de nœud et étant historiquement écrit dans la divergence de chaîne de blocs ; et
l'écriture du bloc cible dans la chaîne de blocs cible en réponse à la détermination, dans la mémoire de nœud, que le bloc cible appartient à la chaîne la plus longue comprenant la divergence de chaîne de blocs, et l'écriture de données dans le cache de bloc cible pour le bloc cible dans la base de données de chaîne de blocs correspondant à la chaîne de blocs cible.

9. Procédé selon la revendication 8, dans lequel le cache de lecture de chaîne contient des données de chaîne historiques comprenant des données écrites avec succès dans un cache de bloc historique de la chaîne de blocs cible à un instant historique ; le cache de bloc historique étant un cache d'écriture d'un bloc historique dans la divergence de chaîne de blocs, et un horodatage de génération de bloc du bloc historique étant antérieur à un horodatage de génération de bloc du bloc cible ;
le procédé comprend en outre :
la détermination des données dans le cache de bloc cible en tant que données de chaîne cible sur la chaîne de blocs cible, l'écriture des données de chaîne cible dans le cache de lecture de chaîne, et la mise à jour des données de chaîne historiques dans le cache de lecture de chaîne avec les données de chaîne cible.

10. Procédé selon la revendication 9, dans lequel la divergence de chaîne de blocs comprend un bloc divergé ayant la même hauteur de bloc que le bloc cible ;
le procédé comprend en outre :
la détermination d'une hauteur de bloc cible du bloc cible dans la divergence de chaîne de blocs, l'acquisition d'une table de relation de hachage à partir de la mémoire de nœud, et la détermination d'une colonne de liste cible dans la table de relation de hachage où se trouve la hauteur de bloc cible ;
l'acquisition d'une valeur de hachage de bloc divergé du bloc divergé à partir de la colonne de liste cible, et la détermination d'un cache de bloc divergé correspondant à la valeur de hachage de bloc divergé dans la table de mappage de relation de cache d'écriture ; et
l'effacement des données de chaîne cible du cache de bloc cible, et l'effacement du cache de bloc divergé.

11. Procédé selon la revendication 1, comprenant en outre :
l'acquisition du contrat de lecture de données à partir d'une base de données de chaîne de blocs associée à la mémoire de nœud dans le cas où le contrat de lecture de données associé à la transaction n'est pas acquis dans le cache de lecture de chaîne.

12. Procédé selon la revendication 3, comprenant en outre :
l'écriture des données de cache cible dans le cache de premier bloc dans la base de données de chaîne de blocs correspondant à la chaîne de blocs cible en réponse à la détermination, dans la mémoire de nœud, que le premier bloc appartient à la chaîne la plus longue comprenant la divergence de chaîne de blocs.

13. Procédé selon la revendication 12, dans lequel, dans le cas où la transaction comprend une première transaction et une seconde transaction, les données de cache cible comprennent des premières données de cache correspondant à la première transaction et des secondes données de cache correspondant à la seconde transaction ; la seconde transaction étant antérieure à la première transaction ;
l'écriture des données de cache cible dans le cache de premier bloc dans la base de données de chaîne de blocs correspondant à la chaîne de blocs cible comprend :
l'écriture des premières données de cache dans le cache de premier bloc dans la base de données de chaîne de blocs correspondant à la chaîne de blocs cible, et l'écriture des secondes données de cache dans le cache de premier bloc dans la base de données de chaîne de blocs.

14. ¨ Dispositif informatique, **caractérisé en ce qu'**il comprend : un processeur et une mémoire, le processeur étant connecté à la mémoire, la mémoire étant configurée pour stocker un programme informatique, et le processeur étant configuré pour invoquer le programme informatique, pour amener le programme informatique à exécuter le procédé selon l'une quelconque des revendications 1 à 13.

15. Support de stockage lisible par ordinateur, stockant un programme informatique, **caractérisé en ce que** le programme informatique est chargé et exécuté par un processeur pour amener un dispositif informatique avec le processeur à exécuter le procédé selon l'une quelconque des revendications 1 à 13.
